# EUROPEAN PATENT SPECIFICATION

(11) **EP 3 407 653 B1**
(45) Date of publication and mention of the grant of the patent: **29.12.2021**
(21) Application number: 17741456.2
(22) Date of filing: 19.01.2017
(51) Int. Cl.: H04W 72/04, H04W 16/14, H04W 72/12

(54) **USER TERMINAL, WIRELESS BASE STATION, AND WIRELESS COMMUNICATION METHOD**
BENUTZERENDGERÄT, DRAHTLOSE BASISSTATION UND DRAHTLOSKOMMUNIKATIONSVERFAHREN
TERMINAL D'UTILISATEUR, STATION DE BASE SANS FIL ET PROCÉDÉ DE COMMUNICATION SANS FIL

(30) Priority: 20.01.2016 JP 2016009115
(43) Date of publication of application: 28.11.2018
(73) Proprietor: NTT DOCOMO, INC., Chiyoda-ku Tokyo 100-6150 (JP)
(72) Inventor: HARADA, Hiroki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2017/001654
(87) International publication number: WO 2017/126579

(56) References cited:
- EP-A2- 2 384 599
- JP-A- 2015 065 678
- JP-A- 2015 092 716
- JP-A- 2015 179 994
- JP-A- 2015 179 994
- SAMSUNG: "Discussion on UL transmission for LAA", 3GPP DRAFT; R1-152872, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 24 May 2015 (2015-05-24), XP050973755, Retrieved from the Internet: URL:http://www.3gpp.org/ftp/Meetings_3GPP_ SYNC/RAN1/Docs/ [retrieved on 2015-05-24]
- QUALCOMM INCORPORATED,: 'Uplink Waveform for LAA' 3GPP TSG-RAN WG1#81 R1-152790, [Online] 29 April 2015, pages 1 - 4, XP050971219 Retrieved from the Internet: <URL:http://www.3gpp.org/ftp/tsg _ ran/ WG1_RL1/TSGR1_81/Docs/R1-152790.zip>
- SAMSUNG: 'Discussion on UL transmission for LAA' 3GPP TSG-RAN WG1#81 R1-152872, [Online] 29 May 2015, pages 1 - 5, XP050973755 Retrieved from the Internet: <URL:http://www.3gpp.org/ftp/Meetings_3GPP_ SYNC/RAN1/Docs/>
- NTT DOCOMO, INC: 'Discussion on PUSCH design for eLAA UL' 3GPP TSG-RAN WG1#84 R1-160946, [Online] 19 February 2016, pages 1 - 5, XP051063937 Retrieved from the Internet: <URL:http://www.3gpp.org/ftp/tsg_ran/WG1_RL 1/TSGR1_84/Docs/>

## Description

### TECHNICAL FIELD

The present invention relates to a user terminal, a radio base station, system and a radio communication method in a next generation mobile communication system.

### BACKGROUND ART

In Universal Mobile Telecommunications System (UMTS) networks, for the purpose of higher data rates, low latency, and the like, Long Term Evolution (LTE) has been specified (Non-Patent Literature 1). For the purpose of achieving further broadbandization and increased speed beyond LTE (in other words, LTE Rel.8 or 9), LTE-A (in other words, LTE-ADVANCED, LTE Rel.10, 11, or 12) is specified, and a succeeding system of the LTE (in other words, for example, Future Radio Access (FRA), 5th generation mobile communication system (5G), and LTE Rel.13) is also examined.

The LTEs Rel. 8 to 12 have been specified assuming exclusive operations in a frequency band (in other words, a licensed band) licensed to a telecommunication carrier (operator). For example, 800 MHz, 1.7 GHz, and 2 GHz are used as the licensed band.

Recently, a spread of sophisticated user terminals (UE: User Equipment), such as a smart phone and a tablet, has rapidly increased a user traffic. To absorb the increasing user traffic, further addition of frequency bands has been requested. However, a spectrum of the licensed band (licensed spectrum) has a limit.

In view of this, with the Rel.13 LTE, there has been examined an extension of a frequency in the LTE system using a band of an unlicensed spectrum (in other words, an unlicensed band) usable in addition to the licensed band (Non-Patent Literature 2). For example, a use of 2.4 GHz-band and 5 GHz-band in which Wi-Fi (registered trademark) and Bluetooth (registered trademark) are usable as the unlicensed band has been examined.

Specifically, performing a Carrier Aggregation (CA) between the licensed band and the unlicensed band has been examined in the Rel. 13 LTE. Thus, communications using both the licensed band and the unlicensed band are referred to as a License-Assisted Access (LAA). In the future, Dual Connectivity (DC) with the licensed band and the unlicensed band and Stand-Alone (SA) with the unlicensed band are possibly a target for examination of the LAA.

Patent document JP 2015-179994 A discloses a user terminal that communicates with a radio base station using a license band and a non-license band, and a detection unit that detects a signal transmitted from another transmission point in the non-license band, and is transmitted from the radio base station A control unit that controls transmission of a UL signal in a non-licensed band based on a UL transmission instruction and a detection result of the detection unit; and a transmission unit that transmits a UL signal. A user terminal that transmits information on a detection result to a radio base station using a license band.

### CITATION LIST

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall description; Stage 2"
Non-Patent Literature 2: AT&T, "Drivers, Benefits and Challenges for LTE in Unlicensed Spectrum," 3GPP TSG RAN Meeting #62 RP-131701

### SUMMARY OF INVENTION

The invention is defined by the appended independent claims and further embodiments are described by the dependent claims.

### Technical Problem

An Uplink (UL) transmission in a licensed band applies a clustered Single Carrier Frequency Division Multiple Access (SC-FDMA) that employs a resource block (Physical Resource Block (PRB)) as an allocation unit and allocates clusters, which are one or more consecutive PRBs, to a user terminal. Clustered SC-FDMA in the licensed band supports a single cluster allocation, which allocates a single cluster, and a dual cluster allocation, which allocates two clusters.

Meanwhile, it is assumed that the uplink transmission in an unlicensed band has a property different from the uplink transmission in the licensed band, for example, a minimum transmission bandwidth of the user terminal is restricted to equal to or more than a predetermined bandwidth. Accordingly, an application of an allocation method for an uplink resource in the licensed band to the unlicensed band without a change possibly fails to appropriately execute the uplink transmission in the unlicensed band.

The present invention has been made in consideration of this point, and an object of the present invention is to provide a user terminal, a radio base station, and a radio communication method that can execute the uplink transmission using the allocation method for the uplink resource suitable for a cell (for example, a cell in the unlicensed band) to which listening is applied before the transmission.

### Solution to Problem

The invention is defined by the appended independent claims and further embodiments are described by the dependent claims.

### Advantageous Effects of Invention

With the present invention, an uplink transmission can be executed using an allocation method for the uplink resource suitable for a cell (for example, a cell in an unlicensed band) to which listening is applied before the transmission.

### BRIEF DESCRIPTION OF DRAWINGS

FIGS. 1A and 1B are drawings illustrating an exemplary allocation of an uplink resource.
FIG. 2 is a drawing illustrating an exemplary interlaced multi-cluster allocation.
FIG. 3 is a drawing illustrating a notification example of an allocation resource by the interlaced multi-cluster allocation according to a first aspect.
FIGS. 4A and 4B are drawings illustrating restriction examples of parameters regarding a transmission bandwidth (total transmission bandwidth) of a user terminal according to a second aspect.
FIG. 5 is a drawing illustrating an exemplary multi sub-frame scheduling according to the second aspect.
FIG. 6 is a drawing illustrating an exemplary listening according to a third aspect.
FIG. 7 is a drawing illustrating an exemplary schematic constitution of a radio communication system.
FIG. 8 is a drawing illustrating an exemplary overall constitution of a radio base station.
FIG. 9 is a drawing illustrating an exemplary function constitution of the radio base station.
FIG. 10 is a drawing illustrating an exemplary overall constitution of a user terminal.
FIG. 11 is a drawing illustrating an exemplary function constitution of the user terminal.
FIG. 12 is a drawing illustrating an exemplary hardware constitution of the radio base station and the user terminal.

### DESCRIPTION OF EMBODIMENTS

It is considered that a system that operates LTE/LTE-A in an unlicensed band (for example, an LAA system) requires an interference control function for coexistence with the LTE, Wi-Fi, or another system of another carrier. The system that operates the LTE/LTE-A in the unlicensed band may be collectively referred to as, for example, LAA, LAA-LTE, LTE-U, and U-LTE, regardless of an operation form any of CA, DC, or SA.

Generally, a transmission point (for example, a radio base station (eNB) and the user terminal (UE)) that performs communications using a carrier of the unlicensed band (may be referred to as a carrier frequency or simply referred to as a frequency) is inhibited to perform a transmission in this carrier in the case where another entity (for example, another user terminal) that performs communications in the carrier of this unlicensed band is detected.

In view of this, the transmission point executes a listening (Listen Before Talk (LBT)) at a timing before a predetermined period from a transmission timing. Specifically, the transmission point that executes the LBT searches for a target entire carrier band (for example, one Component Carrier (CC)) at the timing before the predetermined period from the transmission timing to confirm whether other apparatuses (for example, the radio base stations, the user terminals, and Wi-Fi apparatuses) perform communications in this carrier band.

In this description, the listening means an operation to detect/measure whether other transmission points or similar points transmit signals exceeding a predetermined level (for example, a predetermined electric power) before a certain transmission point (for example, the radio base station and the user terminal) transmits a signal. The listening executed by the radio base station and/or the user terminal may referred to as, for example, LBT, a Clear Channel Assessment (CCA), and a carrier sense.

When the transmission point can confirm that the other apparatuses do not perform the communications, the transmission point executes the transmission using this carrier. For example, in the case where a received electric power measured by the LBT (a received signal electric power during the LBT period) is equal to or less than a predetermined threshold, the transmission point judges that a channel is in an idle state (LBT_{idle}) and executes the transmission. In other words, "a channel is in an idle state" means a state where the channel is not occupied by a specific system. This is also referred to as, for example, a channel idles, a channel is clear, and a channel is free.

Meanwhile, in the case where the transmission point detects that another apparatus is using even a part of the target carrier band, the transmission point cancels own transmitting process. For example, in the case where the transmission point detects that a received electric power of a signal from another apparatus related to this band exceeds a predetermined threshold, the transmission point judges that the channel is in the busy state (LBT_{busy}) and does not execute the transmission. In the LBT_{busy}, this channel becomes usable only after that the LBT is executed again and it can be confirmed that the channel is in the idle state. A method of judging the idle state/busy state of the channel by the LBT is not limited to this.

Frame Based Equipment (FBE) and Load Based Equipment (LBE) have been examined as a mechanism (scheme) of the LBT. Differences between both are, for example, a frame structure used for transmission/reception and a channel occupancy time. The FBE is one whose constitution for transmission/reception related to the LBT has a fixed timing and is also referred to as, for example, a category 2. The LBE is one whose constitution for transmission/reception related to the LBT is not fixed in a time line direction and executes the LBT according to a demand. The LBE is also referred to as, for example, a category 4. The transmission without the LBT is also referred to as, for example, a category 1.

Specifically, the FBE has a fixed frame period and has the following mechanism. As a result of the carrier sense with a predetermined frame and a certain period of time (may also be referred to as, for example, an LBT duration), when the channel is usable, the FBE executes the transmission. When the channel is unusable, the FBE does not execute the transmission until a carrier sense timing of the next frame and stands by.

Meanwhile, the LBE has the following mechanism. As a result of executing the carrier sense (initial CCA), when the channel is unusable, the LBE extends a carrier sense time and executes an Extended CCA (ECCA) procedure that continuously executes the carrier sense until the channel becomes usable. To appropriately avoid a collision, the LBE requires a random back-off.

The carrier sense time (may also be referred to as a carrier sense period) is a period (for example, one symbol length) during which a process such as the listening is executed to obtain one LBT result and availability of the channel is judged.

The transmission point can transmit a predetermined signal (for example, a channel reservation signal) according to the LBT result. Here, the LBT result means information on a vacant state of the channel obtained by the LBT in the carrier to which the LBT is configured (for example, LBT_{idle} and LBT_{busy}).

In the case where the transmission point starts the transmission when the LBT result is the idle state (LBT_{idle}), the transmission point can execute the transmission omitting the LBT by a predetermined period (for example, 10 to 13 ms). Such transmission is also referred to as, for example, a burst transmission, a burst, and a transmission burst.

As described above, the introduction of the interference control in the identical frequency based on the LBT mechanism to the transmission point in the LAA system ensures avoiding, for example, an interference between the LAA and the Wi-Fi and an interference between the LAA systems. Even in the case where the transmission points are independently controlled by each operator who operates the LAA system, the interference can be reduced without the LBT grasping the respective control contents.

In the LAA system, the user terminal executes a Radio Resource Management (RRM) measurement (includes a Reference Signal Received Power (RSRP) measurement and a similar measurement) to detect a cell in the unlicensed band (Secondary Cell (SCell)). As a signal for this RRM measurement, the use of a Discovery Reference Signal (DRS) has been examined.

It is only necessary that the DRS used in the LAA system includes at least one of a synchronization signal (Primary Synchronization Signal (PSS)/Secondary Synchronization Signal (SSS)), a Cell-specific Reference Signal (CRS), and a Channel State Information Reference Signal (CSI-RS). The DRS is transmitted in a DMTC duration at a predetermined cycle (also referred to as a Discovery Measurement Timing Constitution Periodicity (DMTC duration)). This DRS may be referred to as, for example, a detection signal, a detection measurement signal, a Discovery Signal (DS), LAADRS, and LAADS.

In the LAA system, the user terminal executes the CSI measurement using the CRS or/and the CSI-RS (hereinafter, the CRS/CSI-RS) transmitted by cell in the unlicensed band and reports the measurement result to the radio base station (CSI reporting). This CRS may be the CRS included in respective sub-frames on which a downlink transmission is executed and may be the CRS constituting the DRS. This CSI-RS is the CSI-RS transmitted at a predetermined cycle (for example, 5 ms and 10 ms). This CSI-RS is configured separately from the CSI-RS, which constitutes the DRS.

When the LAA system succeeds the LBT (is in the idle state), it is assumed that the minimum transmission bandwidth used by the transmission point is restricted to be equal to or more than a predetermined bandwidth (for example, 5 MHz or 4 MHz).

The uplink transmission in the licensed band uses a clustered SC-FDMA that uses a resource block (Physical Resource Block (PRB), such as a PRB pair) as an allocation unit and allocates clusters, which are the one or more consecutive PRBs, to the user terminal. The clustered SC-FDMA may also be referred to as, for example, a Clustered DFT spread OFDM and a clustered DFT-S-OFDM.

Specifically, the uplink transmission in the licensed band supports a single cluster allocation (in other words, for example, a type 0, an uplink resource allocation type 0, and a single cluster transmission), which allocates a single cluster to the one user terminal, and a dual cluster allocation (in other words, for example, a type 1, an uplink resource allocation type 1, and a dual cluster transmission), which allocates two clusters to the one user terminal.

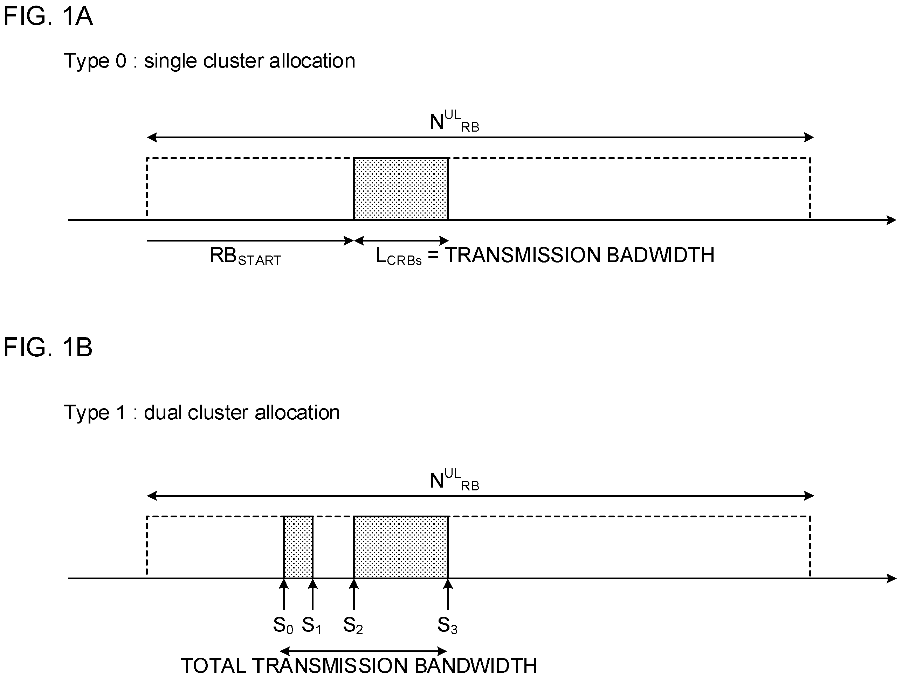

FIG. 1 is a drawing illustrating an exemplary allocation of the uplink resource in the licensed band. FIG. 1A illustrates an exemplary allocation resource by the single cluster allocation (hereinafter referred to as the type 0). FIG. 1B illustrates an exemplary allocation resource by the dual cluster allocation (Hereinafter referred to as the type 1).

As illustrated in FIG. 1A, with, the type 0, the allocation resource to the user terminal is indicated by a Resource Indication Value (RIV) corresponding to a start resource block (RB_{START}) and the number of resource blocks (transmission bandwidth) (L_{CRBs}, L_{CRBs} ≥ 1), which is allocated continuous with the start resource block (RB_{START}). This RIV is calculated based on the number of resource blocks (N^{UL}_{RB}) constituting an uplink band, the RB_{START}, and the L_{CRBs}. The RIV is arranged to a resource allocation field in downlink control information (DCI) (in other words, for example, an uplink scheduling grant and an UL grant). For example, with the uplink system band of 20 MHz, the resource allocation field is constituted of 13 bits.

As illustrated in FIG. 1B, with the type 1, the allocation resource to the user terminal includes the two clusters (in other words, a set of resource blocks and a resource block set). The respective clusters are constituted of the one or more consecutive resource blocks. The allocation resource to the user terminal is indicated by indexes S₀ and S₁ indicative of start and end positions of a first cluster and indexes S₂ and S₃ indicative of start and end positions of a second cluster.

An index r indicative of the indexes S₀, S₁, S₂, and S₃ is arranged at the resource allocation field in the UL grant. For example, with the uplink system band of 20 MHz, the resource allocation field is constituted of 14 bits. The indexes S₀, S₁, S₂, and S₃ may be the indexes for the resource block or may be indexes for a resource block group (RBG).

In the above-described uplink transmission in the licensed band, concentrating transmission electric powers to the narrowed transmission bandwidth by narrowing down the transmission bandwidth of the user terminal (for example, the L_{CRBs} in FIG. 1A) secures an uplink coverage.

Meanwhile, it is assumed that, with the uplink transmission in the unlicensed band, the minimum transmission bandwidth is restricted to be equal to or more than a predetermined bandwidth, for example, 4 MHz. Thus, there is a possibility that the allocation method of the uplink resource in the licensed band illustrated in FIG. 1 does not fit in the unlicensed band in which the minimum transmission bandwidth is configured to be equal to or more than the predetermined bandwidth.

Specifically, with the type 0 illustrated in FIG. 1A, for example, in the case where the transmission bandwidth L_{CRBs} of the user terminal is restricted to be equal to or more than the predetermined bandwidth (for example, 4 MHz, 20 resource blocks), dispersion of a transmission electric power to equal to or more than this predetermined bandwidth possibly results in deterioration of the uplink coverage. With the transmission bandwidth L_{CRBs} restricted to the predetermined bandwidth, since a kind of the assumed transmission bandwidth L_{CRBs} decreases, it is also assumed that this eliminates the need for use of all bit numbers of an existing resource allocation field.

With the type 1 illustrated in FIG. 1B, in the case where the entire transmission bandwidth (S₃ - S₀) of the user terminal (in other words, a total transmission bandwidth) is restricted to be equal to or more than the predetermined bandwidth (for example, 4 MHz, 20 resource blocks), it is assumed that this eliminates the need for configuring sizes of the first and the second clusters to be changeable any more. That is, it is assumed that, this eliminates the need for specifying the first cluster size (S₁ - S₀) and the second cluster size (S₃ - S₂) using the four indexes, S₀, S₁, S₂, and S₃.

Accordingly, the uplink resource allocation method suitable for the unlicensed band in which the transmission bandwidth (total transmission bandwidth) is restricted to be equal to or more than the predetermined bandwidth (for example, 4 MHz, 20 resource blocks) is preferable. Specifically, the uplink resource allocation method that can secure the uplink coverage is preferable also in the case where the transmission bandwidth (total transmission bandwidth) of the user terminal is configured to be equal to or more than the predetermined bandwidth (for example, 4 MHz).

As such uplink resource allocation method, for example, there has been examined a multi-cluster allocation that employs a plurality of clusters uniformly dispersed in a frequency direction in a system band as a transmission unit and allocates these transmission units to the user terminal. The multi-cluster allocation does not limit the maximum number of clusters that can be allocated to the one user terminal to two, like the uplink resource allocation method in the licensed band illustrated in FIG. 1. This multi-cluster allocation is also be referred to as, for example, an interlaced multi-cluster allocation and an interlaced multi-cluster transmission.

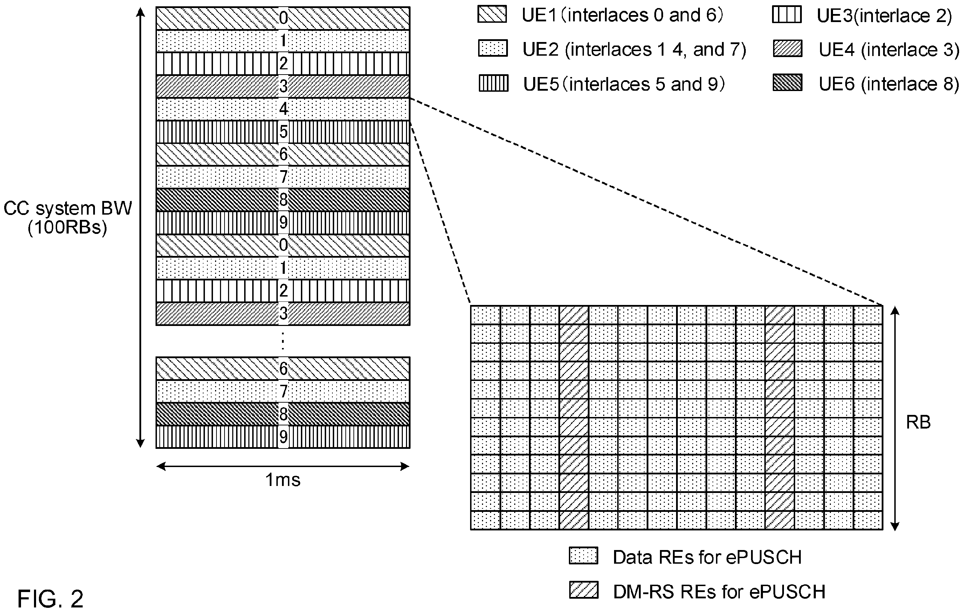

FIG. 2 is a drawing illustrating an exemplary interlaced multi-cluster allocation. In FIG. 2, the transmission unit in the uplink transmission is constituted of the plurality of clusters arranged (spaced) at regular intervals in a frequency direction in the system band. This transmission unit may be referred to as an interlace. The respective clusters constituting the one interlace are constituted of one or more consecutive frequency units (for example, the resource block and a subcarrier, for example, the one resource block in FIG. 2).

For example, in FIG. 2, the system band is 20 MHz (100 resource blocks), and an interlace #i is constituted of the ten resource blocks (clusters) with index values of {***i***, ***i*** + 10, ***i*** + 20, ..., ***i*** + 90}. In FIG. 2, numbers given to the respective resource blocks indicate the indexes of the interlaces.

As illustrated in FIG. 2, in the case where the uplink system band is constituted of 20 MHz (100 resource blocks), ten interlaces #0 to #9 are disposed. For example, in FIG. 2, the interlaces #0 and #6 are allocated to the user terminal #1. That is, the 20 clusters constituting the interlaces #0 and #6 are allocated to the user terminal #1.

Similarly, the 30 clusters constituting the interlaces #1, #4, and #7 are allocated to a user terminal #2. The ten clusters constituting the interlace #2 are allocated to a user terminal #3. The ten clusters constituting the interlace #3 are allocated to a user terminal #4. The 20 clusters constituting the interlaces #5 and #9 are allocated to a user terminal #5. The ten clusters constituting the interlace #8 are allocated to a user terminal #6.

In FIG. 2, the one resource block in the one interlace corresponds to the one cluster; however, this should not be constructed in a limiting sense. It is only necessary that the one cluster is constituted of the one or more consecutive frequency units (for example, the resource block, the subcarrier, and the resource block group). In FIG. 2, the interlace (transmission unit) is constituted of the ten clusters; however, the number of clusters constituting the one interlace is not limited to ten.

With the interlaced multi-cluster allocation illustrated in FIG. 2, the interlace (transmission unit) allocated to the user terminal is constituted of the plurality of clusters dispersed in the system band. Accordingly, the total transmission bandwidth of the user terminal can be configured to be equal to or more than the predetermined bandwidth (for example, 4 MHz). Meanwhile, the respective clusters are, for example, constituted of the narrow band such as the one resource block. Accordingly, concentrating the transmission electric powers to this narrow band can prevent the deterioration of the uplink coverage.

The inventors have focused on effectiveness of the interlace multi-cluster allocation to prevent the deterioration of the uplink coverage in the unlicensed band in which the transmission bandwidth (total transmission bandwidth) is restricted to be equal to or more than the predetermined bandwidth (for example, 4 MHz). Thus, the inventors have arrived at the present invention. Specifically, the inventors have found that the single cluster allocation and the interlaced multi-cluster allocation can be supported as the uplink resource allocation method for cell in the unlicensed band.

The following describes one embodiment of the present invention in detail with reference to the drawings. The embodiment describes a carrier (cell) to which the listening is configured as the unlicensed band; however, this should not be constructed in a limiting sense. As long as a frequency carrier (cell) to which the listening is configured is used, the embodiment is applicable regardless of the licensed band or the unlicensed band.

The embodiment assumes the case where the CAor the DC is applied to the carrier to which the listening is not configured (for example, a primary cell (PCell) in the licensed band) and the carrier to which the listening is configured (for example, a secondary cell (SCell) in the unlicensed band); however, this should not be constructed in a limiting sense. For example, the embodiment is also applicable to the case where the Stand-Alone user terminal is connected to the carrier (cell) to which the listening is configured.

In the embodiment, the interlaced multi-cluster allocation is applied to the cell in the unlicensed band; however, this should not be constructed in a limiting sense. This interlaced multi-cluster allocation may be applied to the cell in the licensed band.

### (Radio Communication Method)

With the radio communication method according to the embodiment, the user terminal in the cell on which the listening is executed before the transmission receives the downlink control information (DCI). The downlink control information (DCI) includes the allocation information of the uplink resource allocated by any one of the single cluster allocation or the interlaced multi-cluster allocation. Based on the allocation information, this user terminal determines the uplink resource used for the transmission of Physical Uplink Shared Channel (PUSCH).

Here, the single cluster allocation (type 0) is a first allocation method for the uplink resource that allocates the single cluster to this user terminal (see FIG. 1A). As described above, the allocation resource by the type 0 is identified by allocation information included in the DCI (for example, the RIV corresponding to the RB_{START} and the L_{CRBs} configured to the resource allocation field).

The interlaced multi-cluster allocation is a second allocation method for the uplink resource that allocates the transmission units constituted of the plurality of clusters arranged at regular intervals in the frequency direction to the user terminal. The interlaced multi-cluster allocation is also referred to as, for example, a type 2 and an uplink resource allocation type 2, and is hereinafter referred to as the type 2. The maximum number of clusters (N) allocated by the interlaced multi-cluster allocation is not limited to be two.

Whether the uplink resource is allocated using any of the allocation methods of the type 0 or 2 may be indicated by type information in the DCI (for example, a value in a resource allocation type field). Based on the type information in the DCI, the user terminal may interpret the allocation information (for example, the value in the resource allocation field) by any of the type 0 or the type 2. When the type information indicates the dual cluster allocation (type 1, a third allocation method) illustrated in FIG. 1B, the user terminal may interpret that the uplink resource is allocated by the type 2.

### <First Aspect>

The first aspect describes a notification method of the allocation resource by the interlaced multi-cluster allocation (type 2). The interlaced multi-cluster allocation is also referred to as, for example, the type 2 and the uplink resource allocation type 2 and is hereinafter referred to as the type 2.

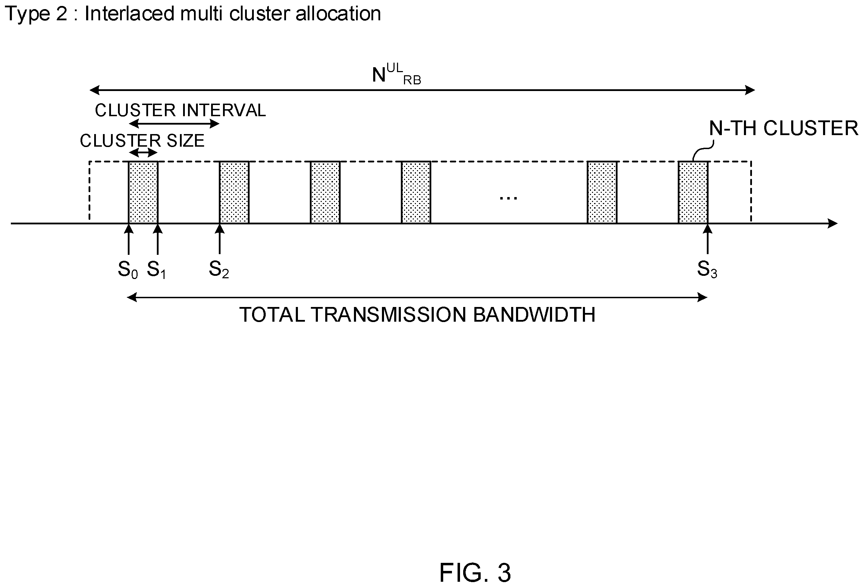

FIG. 3 is a drawing illustrating the notification example of the allocation resource by the interlaced multi-cluster allocation (type 2) according to the first aspect. As illustrated in FIG. 3, with the type 2, the allocation resource for the user terminal includes ***N*** (***N*** ≥ 2) pieces of clusters constituting the one transmission unit (interlace).

As illustrated in FIG. 3, the user terminal may determine a start position of the first cluster, sizes of the respective clusters (cluster sizes), an arrangement interval between the respective clusters (cluster interval), and the total transmission bandwidth of the user terminal based on the allocation information included in the DCI to determine the allocation resource for the user terminal.

Here, the allocation information may indicate the first and the second index values S₀ and S₁, which indicate the start and the end positions of the first cluster, the third index value S₂, which indicates the start position of the second cluster, and the fourth index value S₃, which indicates the end position of the N-th (last) cluster. The allocation information indicative of these first to fourth index values S₀, S₁, S₂, and S₃ may be arranged to the resource allocation field of the DCI.

For example, the user terminal may determine the start position of the first cluster by the first index value (S₀). The user terminal may determine the cluster size based on a difference between the second index value and the first index value (S₁ - S₀). The user terminal may determine the cluster interval based on a difference between the third index value and the first index value (S₂ - S₀).The user terminal may determine the total transmission bandwidth based on a difference between the fourth index value and the first index value (S₃ - S₀).

The first to the fourth index values S₀, S₁, S₂, and S₃ are, for example, the PRB indexes; however, this should not be constructed in a limiting sense. The first to the fourth index values S₀, S₁, S₂, and S₃ may be the indexes for the resource block group (RBG) or similar indexes.

The type 2 illustrated in FIG. 3 notifies the allocation resource by reusing parameters S₀, S₁, S₂, and S₃, which are used by the type 1 described in FIG. 1B. In view of this, bit sizes of the resource allocation fields in the DCI are equal between the type 2 and the type 1.

When the type information in the DCI indicates the type 1 (for example, the value in the resource allocation type field is "1"), the user terminal may judge that the type 2 allocates the uplink resource and may interpret the allocation information (for example, the value in the resource allocation field) by the type 2. That is, the user terminal may read the interpretation of the first to the fourth index values S₀, S₁, S₂, and S₃ differently.

Similar to the dual cluster allocation (type 1), the interlace multi-cluster allocation (type 2) may not apply a hopping of the PUSCH.

As described above, the first aspect specifies the allocation resource by the type 2 by reusing the first to the fourth index values, which are used for the notification of the allocation resource by the type 1. This ensures notifying the user terminal of the allocation resource by the type 2 without changing an existing DCI format (for example, a DCI format 0 or 4).

FIG. 3 illustrates the case where the single transmission unit (interlace) is allocated to the one user terminal as the example. However, for example, like the user terminals #1, #2, and #5 in FIG. 2, the plurality of transmission units may be allocated to the one user terminal. In this case, the DCI may internally include start positions of the plurality of clusters constituting another transmission unit (interlace), the cluster sizes, the cluster interval, and the allocation information to determine the total transmission bandwidth (the existing DCI format may be extended).

### <Second Aspect>

At the cell in the licensed band, the transmission bandwidth (total transmission bandwidth) of the user terminal is restricted to be equal to or more than the predetermined bandwidth (for example, 4 MHz). Accordingly, the restriction on the parameter regarding the transmission bandwidth (total transmission bandwidth) of the user terminal can reduce the bit numbers of the allocation information (for example, the value in the resource allocation field) of the uplink resource in the DCI, thereby ensuring notifying new information without an increase in bit numbers of the existing DCI format.

The following describes the second aspect on restrictions on the parameters regarding the transmission bandwidth (total transmission bandwidth) of the user terminal and the multi sub-frame scheduling with the reduced bit. The second aspect mainly describes differences from the first aspect.

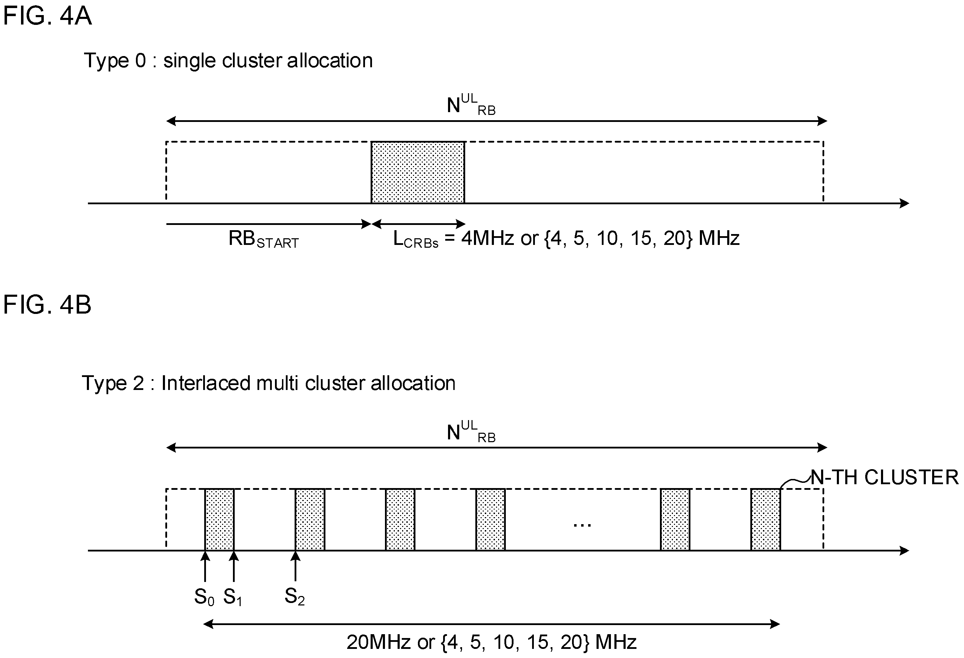

FIG. 4 is a drawing illustrating exemplary restrictions of the parameters regarding the transmission bandwidth (total transmission bandwidth) of the user terminal. FIG. 4A illustrates the restriction example by the type 0, and FIG. 4B illustrates the restriction example by the type 2.

As illustrated in FIG. 4A, in the case where the type 0 restricts the transmission bandwidth (L_{CRBs}) of the user terminal only to a fixed value (for example, 4 MHz), the notification of the transmission bandwidth (L_{CRBs}) to the user terminal becomes unnecessary. That is, it is only necessary for the allocation information in the DCI (for example, the resource allocation field value) to indicate only the start position of the single cluster (RB_{START}); therefore, the allocation information does not need to indicate the transmission bandwidth (L_{CRBs}).

Alternatively, in the case where the transmission bandwidth (L_{CRBs}) is restricted to a plurality of candidate values (for example, 4 MHz, 5 MHz, 10 MHz, 15 MHz, and 20 MHz), it is only necessary for the allocation information in the DCI (for example, the resource allocation field value) to indicate any one of these plurality of candidate values as the transmission bandwidth (L_{CRBs}). In view of this, compared with the case where the transmission bandwidth is not restricted to the plurality of candidate values, this allows reducing the bit numbers required to notify the transmission bandwidth (L_{CRBs}).

Thus, the restriction of the parameter (L_{CRBs}) regarding the transmission bandwidth in the type 0 allows reducing the bit numbers of the allocation information indicative of this parameter (L_{CRBs}) and the parameter indicative of the start position of the cluster (RB_{START}) (that is, the resource identification value (RIV), the value in the resource allocation field).

Meanwhile, as illustrated in FIG. 4B, with the type 2, in the case where the total transmission bandwidth of the user terminal is restricted to only the fixed value (for example, 20 MHz), the notification of the fourth index value (S₃) used for determining the total transmission bandwidth becomes unnecessary. That is, it is only necessary for the allocation information in the DCI (for example, the resource allocation field value) to indicate the first and the second index values (S₀ and S₁), which indicate the start and the end positions of the first cluster, and the third index value (S₂), which indicates the start position of the second cluster; therefore, the allocation information does not need to indicate the fourth index value (S₃).

Alternatively, in the case where the total transmission bandwidth is restricted to the plurality of candidate values (for example, 4 MHz, 5 MHz, 10 MHz, 15 MHz, and 20 MHz), it is only necessary for the allocation information in the DCI to specify any one of these plurality of candidate values. That is, it is only necessary to indicate the first to the third index values (S₀, S₁, S₂) and the value selected from these plurality of candidate values as the allocation information in the DCI (for example, the resource allocation field value).

Thus, with the type 2, restricting the parameter (S₃) regarding the total transmission bandwidth allows reducing the bit numbers of this allocation information compared with the case where the allocation information in the DCI (for example, the resource allocation field value) indicates the first to the third index values (S₀, S₁, S₂) and the fourth index value (S₃), which indicates the end position of the N-th cluster (for example, the PRB index).

With the second aspect, the parameter regarding the transmission bandwidth in the type 0 and the bits reduced by the restriction on the total transmission bandwidth by the type 2 may be used for the multi sub-frame scheduling. Specifically, the DCI (UL grant) that allocates the PUSCH may include sub-frame information indicative of the one or more sub-frames that transmits the PUSCH.

This sub-frame information is, for example, one or two bits. With the use of the one-bit sub-frame information, the transmission of the single sub-frame (for example, a sub-frame #n+4) or the transmission of the two sub-frames (for example, the sub-frames #n+4 and #n+5 or the sub-frames #n+4 and #n+3) may be instructed.

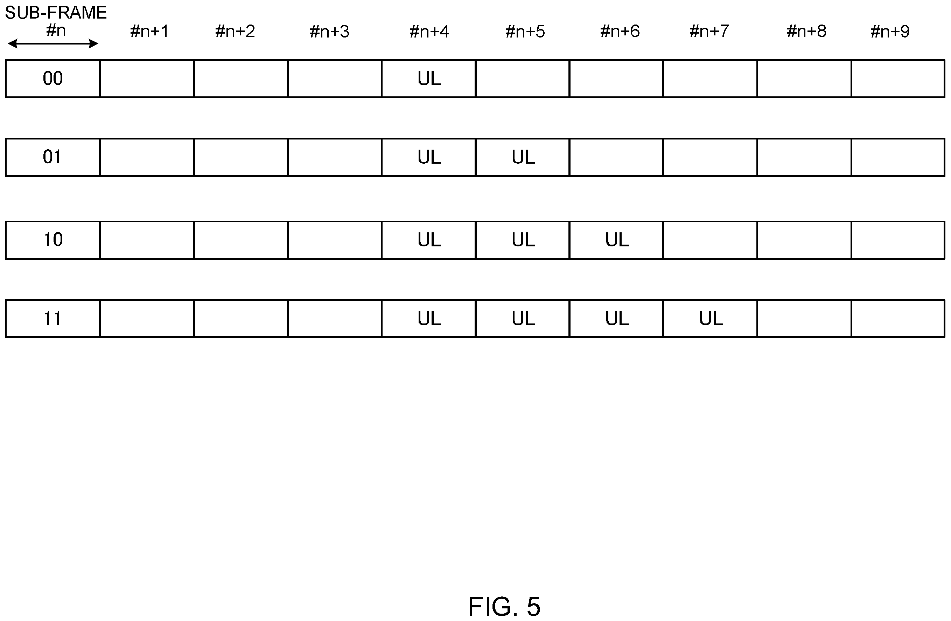

Alternatively, with the use of the two-bit sub-frame information, the transmission of the consecutive sub-frames up to four can be instructed. FIG. 5 is a drawing illustrating an exemplary multi sub-frame scheduling according to the second aspect. FIG. 5 assumes the case where the user terminal receives the UL grant including the two-bit sub-frame information by the sub-frame #n.

For example, as illustrated in FIG. 5, with the sub-frame information of "00", the transmission of the single sub-frame (for example, the sub-frame #n+4) may be instructed. With the sub-frame information of "01", the transmission of the consecutive two sub-frames (for example, the sub-frames #n+4 and #n+5) may be instructed. With the sub-frame information of "10", the transmission of the consecutive three sub-frames (for example, the sub-frames #n+4, #n+5, and #n+6) may be instructed. With the sub-frame information of "11", the transmission of the consecutive four sub-frames (for example, the sub-frames #n+4 to #n+7) may be instructed.

FIG. 5 illustrates the case where the sub-frame information specifies the consecutive sub-frames of the sub-frame #n+4 and after the sub-frame #n+4; however, this should not be constructed in a limiting sense. For example, the sub-frame information may specify the consecutive sub-frames before the sub-frame #n+4. The bit values shown in FIG. 5 are merely one example and this should not be constructed in a limiting sense. Three bits or more may be used as the sub-frame information.

As described above, with the second aspect, the restriction on the parameter regarding the transmission bandwidth by the type 0 and the restriction on the parameter regarding the total transmission bandwidth by the type 2 can reduce the bit numbers of the DCI. The use of the reduced bits to the sub-frame information allows supporting the multi sub-frame scheduling without the change in the entire bit number of the existing DCI format.

### <Third Aspect>

The third aspect describes the case where the bits reduced by the restriction on the parameter regarding the transmission bandwidth (total transmission bandwidth) of the user terminal are used for the listening (LBT). Specifically, the DCI (UL grant) that allocates the PUSCH may include listening information indicative of parameters used for the listening executed by the user terminal before the transmission. The third aspect mainly describes differences from the second aspect. The third aspect may be combined with the second aspect.

This listening information may be at least one of: (1) a value of the random back-off (random back-off value), (2) a size of Contention Window (CW) (CW window size) used to generate this random back-off value, (3) a threshold of electric power detection in the listening, and (4) a type of the listening.

Here, the random back-off means a mechanism that does not immediately start the transmission even if the channel becomes the vacant state (idle state) but waits for the transmission by a randomly configured period and starts the transmission when the channel is clear. The CW window size means a window size to determine a range of the randomly configured back-off period.

The period of the random back-off can be determined based on the randomly configured random value (random back-off value). The range of the random back-off value is determined based on the Contention Window (CW) size and is randomly configured in a range of, for example, 0 to CW size (integer).

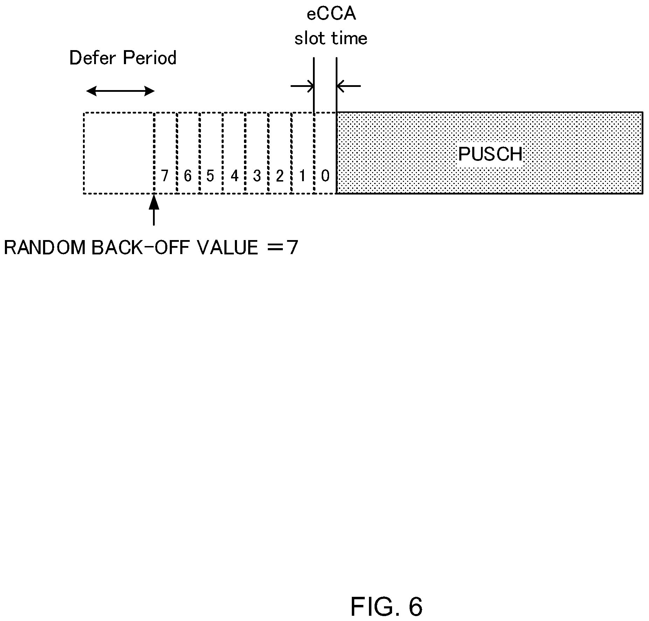

As illustrated in FIG. 6, when the user terminal can confirm that the channel is vacant by a predetermined defer period, the user terminal executes the sensing at intervals of predetermined times (for example, eCCA slot time). When the channel is vacant, the user terminal counts down the random back-off value (here, 7) and can execute the transmission when this random back-off value becomes zero.

It is assumed that, at the cell in the unlicensed band, even if the reception (decoding) of the DCI (UL grant) succeeds, if the listening fails, the transmission of PUSCH fails. When the plurality of user terminals use different random back-off values, the transmission of PUSCH from a certain user terminal possibly interrupts the listening by another user terminal, resulting in a failure of the transmission of PUSCH by the user terminals other than the user terminal that has succeeded the listening first.

In view of this, it is considered to include (1) the random back-off value in the DCI as the listening information. Specifically, the DCI (UL grant) including the identical random back-off value may be notified to the plurality of user terminals where the PUSCH is allocated to the identical sub-frame. This allows these plurality of user terminals to start the transmission of the PUSCH at the identical timing. This ensures avoiding the user terminals other than the user terminal that has succeeded the listening first to fail the transmission of PUSCH.

Alternatively, the DCI may internally include (2) the CW window size used to generate the random back-off value as the listening information. The user terminal executes the listening using the random back-off value, which is generated based on this CW window size.

Alternatively, the DCI may internally include (3) the threshold of electric power detection used for the judgement whether the channel is vacant (whether the listening succeeds) as the listening information. Alternatively, the DCI may internally include (4) the type of listening as the listening information. The type of listening may be, for example, the FBE (category 2), the LBE (category 4), and no-listening (category 1).

As described above, the third aspect uses the bits reduced by the restrictions on the parameter regarding the transmission bandwidth by the type 0 and the parameter regarding the total transmission bandwidth by the type 2 for the listening information. This allows appropriately executing the listening without the change in the bit numbers of the existing DCI format. To use the second aspect in combination with the third aspect, the existing DCI format may be extended.

### <Fourth Aspect>

The following describes the fourth aspect that uses the bits reduced by the restriction on the parameter regarding the transmission bandwidth (total transmission bandwidth) of the user terminal for Aperiodic CSI reporting. Specifically, the DCI (UL grant) that allocates the PUSCH may include aperiodic CSI information indicating the parameter used to report the aperiodic CSI (hereinafter referred to as A-CSI). The fourth aspect mainly describes differences from the second aspect. The fourth aspect may be combined with the second aspect and/or the third aspect.

This aperiodic CSI information may be, for example, cell information indicative of a cell at a report destination for the A-CSI.

With the A-CSI reporting in the licensed band, in the case where a trigger in the DCI (UL grant) (for example, an A-CSI trigger) instructs to report the A-CSI, the A-CSI is reported to the cell where the PUSCH is scheduled by this DCI.

Meanwhile, it is assumed that, in the unlicensed band, the A-CSI is reported to a cell different from the cell to which this DCI is scheduled. For example, in the case where the user terminal receives the DCI including the A-CSI trigger at the cell (SCell) in the unlicensed band, it is assumed that the A-CSI is reported not to the SCell that has received this DCI but to a Primary Cell (PCell) in the licensed band, a secondary cell (SCell) in the licensed band, or a similar cell.

Therefore, the DCI may internally include the cell information indicative of the cell at the report destination for the A-CSI as the aperiodic CSI information.

As described above, the fourth aspect uses the bits reduced by the restrictions on the parameter regarding the transmission bandwidth by the type 0 and the parameter regarding the total transmission bandwidth by the type 2 for the aperiodic CSI information. This allows appropriately reporting the A-CSI without the change in the bit numbers of the existing DCI format. To use the fourth aspect in combination with the second aspect and/or third aspect, the existing DCI format may be extended.

### (Radio Communication System)

The following describes a constitution of a radio communication system according to the embodiment. The above-described radio communication methods according to the respective aspects are applied to this radio communication system. The radio communication methods according to the respective aspects may be applied individually or may be applied in combination.

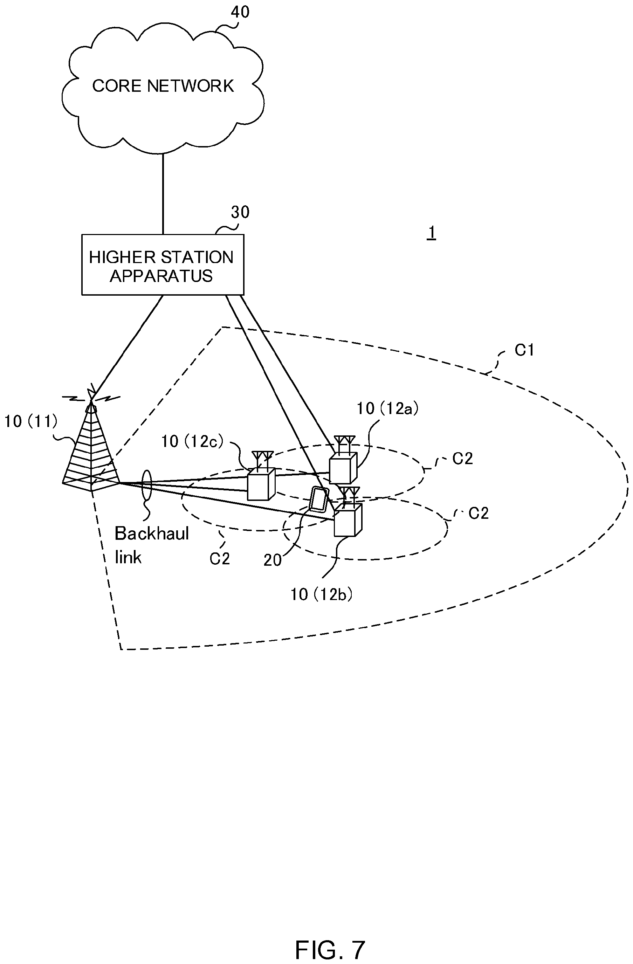

FIG. 7 is a drawing illustrating an exemplary schematic constitution of the radio communication system according to the embodiment. A radio communication system 1 can apply Carrier Aggregation (CA) and/or Dual Connectivity (DC) that integrate a plurality of basic frequency blocks (Component Carriers) with a system bandwidth of the LTE system as one unit. The radio communication system 1 includes a radio base station that can use the unlicensed band (for example, a LTE-U base station).

The radio communication system 1 may be referred to as, for example, SUPER 3G, LTE-A (LTE-Advanced), IMT-Advanced, a 4th generation mobile communication system (4G), a 5th generation mobile communication system (5G), and Future Radio Access (FRA).

The radio communication system 1 illustrated in FIG. 7 includes a radio base station 11 that forms a macrocell C1, and radio base stations 12 (12a to 12c) disposed within the macrocell C1 to form small cells C2 narrower than the macrocell C1. User terminals 20 are disposed in the macrocell C1 and the respective small cells C2. For example, an embodiment that uses the macrocell C1 in the licensed band and uses the small cells C2 in the unlicensed band (LTE-U) is considered. An embodiment that uses some of the small cells in the licensed band and uses the other small cells in the unlicensed band is considered.

The user terminal 20 can be coupled to both of the radio base station 11 and the radio base station 12. It is assumed that the user terminal 20 simultaneously uses the macrocell C1 and the small cell C2 that use different frequencies by the CA or the DC. For example, the radio base station 11 that uses the licensed band can transmit assistance information (for example, a downlink signal constitution) regarding the radio base station 12 that uses the unlicensed band (for example, the LTE-U base station) to the user terminal 20. When the CA is executed in the licensed band and the unlicensed band, it is also possible for the one radio base station (for example, the radio base station 11) to control schedules of the licensed band cells and the unlicensed band cells.

The user terminal 20 may not be coupled to the radio base station 11 but coupled to the radio base station 12. For example, the radio base station 12 using the unlicensed band may be coupled to the user terminal 20 in a Stand-Alone manner. In this case, the radio base station 12 controls the schedule of the unlicensed band cells.

Between the user terminal 20 and the radio base station 11, communications are possible using a carrier (referred to as, for example, an existing carrier and a Legacy carrier) whose bandwidth is narrow in a relatively low frequency band (for example, 2 GHz). On the other hand, between the user terminal 20 and the radio base station 12, a carrier whose bandwidth is wide in a relatively high frequency band (for example, 3.5 GHz and 5 GHz) may be used, and a carrier identical to that with the radio base station 11 may be used. The constitutions of the frequency bands used by the respective radio base stations are not limited to these.

Between the radio base station 11 and the radio base station 12 (alternatively, between two radio base stations 12), a wired connection (for example, optical fiber and X2 interface compliant to Common Public Radio Interface (CPRI)) or a wireless (radio) connection can be constituted.

The radio base station 11 and the respective radio base stations 12 are each coupled to a higher station apparatus 30, and coupled to a core network 40 via the higher station apparatus 30. The higher station apparatus 30, for example, includes an access gateway apparatus, a radio network controller (RNC), and a mobility management entity (MME), but is not limited to these. The respective radio base stations 12 may be coupled to the higher station apparatus 30 via the radio base station 11.

The radio base station 11, which is a radio base station having relatively wide coverage, may be referred to as, for example, a macro base station, an aggregation node, an eNodeB (eNB), and a transmission/reception point. The radio base station 12, which is a radio base station having local coverage, may be referred to as, for example, a small base station, a micro base station, a pico base station, a femto base station, a Home eNodeB (HeNB), a Remote Radio Head (RRH), and a transmission/reception point. Hereinafter, when the radio base stations 11 and 12 are not discriminated, they are collectively referred to as a radio base station 10. It is preferable that the respective radio base stations 10 that share and use the identical unlicensed band are constructed to be temporally synchronized.

Each user terminal 20, which is a terminal corresponding to various communication systems such as the LTE and the LTE-A, may include not only a mobile communication terminal but also a fixed communication terminal.

In the radio communication system 1, as a radio access system, an Orthogonal Frequency Division Multiple Access (OFDMA) is applied to the downlink, and the Single-Carrier Frequency Division Multiple Access (SC-FDMA) is applied to the uplink. The OFDMA is a multiple carrier transmission system that divides the frequency band into a plurality of narrow frequency bands (subcarriers) to communicate such that data is mapped to the respective subcarriers. The SC-FDMA is a single carrier transmission system that divides the system bandwidth into bands constituted of one or consecutive resource blocks for each terminal and uses a plurality of terminals with bands different from one another to reduce interference between the terminals. The uplink and downlink radio access systems are not limited to these combinations.

In the radio communication system 1, as a downlink channel, for example, the Physical Downlink Shared Channel (PDSCH), a Physical Broadcast Channel (PBCH), and a downlink L1/L2 control channel, which are shared by the respective user terminals 20, are used. The PDSCH may be referred to as a downlink data channel. The PDSCH transmits, for example, user data, upper layer control information, and a System Information Block (SIB). The PBCH transmits a Master Information Block (MIB).

The downlink L1/L2 control channel includes, for example, the Physical Downlink Control Channel (PDCCH), the Enhanced Physical Downlink Control Channel (EPDCCH), Physical Control Format Indicator Channel (PCFICH), and the Physical Hybrid-ARQ Indicator Channel (PHICH). The PDCCH transmits, for example, the Downlink Control Information (DCI) including scheduling information of the PDSCH and the PUSCH. The PCFICH transmits Control Format Indicator (CFI), which is the number of the OFDM symbols used for the PDCCH. The PHICH transmits delivery confirmation information (ACK/NACK) of the HARQ with respect to the PUSCH. The EPDCCH is frequency-division-multiplexed with the PDSCH to be used for transmission of, for example, the DCI similar to the PDCCH.

In the radio communication system 1, as the uplink channel, for example, the Physical Uplink Shared Channel (PUSCH), an uplink L1/L2 control channel (Physical Uplink Control Channel (PUCCH)), and a Physical Random Access Channel (PRACH), which are shared by the respective user terminals 20, are used. The PUSCH may be referred to as an uplink data channel. The PUSCH transmits the user data and the upper layer control information. The PUCCH transmits, for example, the downlink Channel Quality Indicator (CQI) and delivery confirmation information (ACK/NACK). The PRACH transmits a random access preamble for connection establishment with the cell.

The radio communication system 1 transmits, for example, a Cell-specific Reference Signal (CRS), a Channel State Information-Reference Signal (CSI-RS), a DeModulation Reference Signal (DMRS), and a detection and/or measurement reference signal (Discovery Reference Signal (DRS)) as the downlink reference signals. The radio communication system 1 transmits, for example, a measurement reference signal (Sounding Reference Signal (SRS)) and the DeModulation Reference Signal (DMRS) as the uplink reference signals. The DMRS may also be referred to as a UE-specific Reference Signal. The transmitted reference signals are not limited to these signals.

### <Radio Base Station>

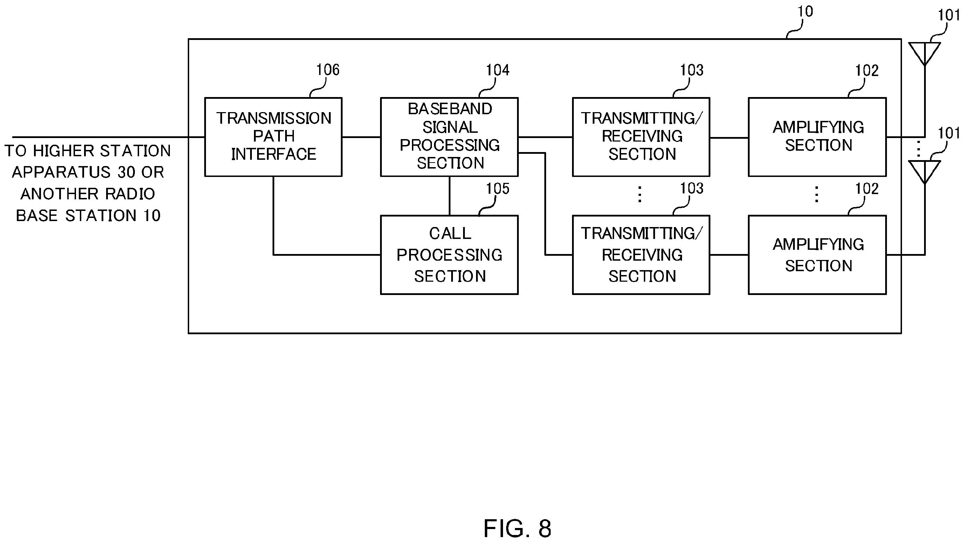

FIG. 8 is a drawing illustrating an exemplary overall constitution of the radio base station according to the embodiment. The radio base station 10 includes a plurality of transmitting/receiving antennas 101, an amplifying section 102, a transmitting/receiving section 103, a baseband signal processing section 104, a call processing section 105, and a transmission path interface 106. It is only necessary to include one or more of the respective transmitting/receiving antenna 101, amplifying section 102, and transmitting/receiving section 103.

The user data transmitted from the radio base station 10 to the user terminal 20 by the downlink is input to the baseband signal processing section 104 from the higher station apparatus 30 via the transmission path interface 106.

The baseband signal processing section 104, performs transmitting processes such as a process of a Packet Data Convergence Protocol (PDCP) layer, dividing and coupling of the user data, a transmitting process of the RLC layer such as a Radio Link Control (RLC) retransmission control, Medium Access Control (MAC) retransmission control (for example, a Hybrid Automatic Repeat reQuest (HARQ) transmitting process), scheduling, transmitting format selection, channel coding, an Inverse Fast Fourier Transform (IFFT) process, and a precoding process on the user data to forward the user data to the transmitting/receiving section 103. The baseband signal processing section 104 also performs the transmitting processes such as the channel coding and the Inverse Fast Fourier Transform on the downlink control signal to forward the downlink control signal to the transmitting/receiving section 103.

The transmitting/receiving section 103 converts a baseband signal precoded to be output by antennas from the baseband signal processing section 104, into a radio frequency band to transmit. A radio frequency signal frequency-converted at the transmitting/receiving section 103 is amplified by the amplifying section 102 to be transmitted from the transmitting/receiving antenna 101.

The transmitting/receiving section 103 can transmit/receive the uplink and/or downlink (hereinafter, the uplink/downlink) signals in the unlicensed band. The transmitting/receiving section 103 may be able to transmit/receive the uplink/downlink signals in the licensed band. The transmitting/receiving section 103 can be constituted of a transmitter/receiver, a transmitting/receiving circuit, or a transmitting/receiving apparatus described based on a common view in the technical field according to the present invention. The transmitting/receiving section 103 may be constituted as an integrated transmitting/receiving section, and may be constituted of the transmitting section and the receiving section.

On the other hand, for the uplink signal, the radio frequency signal received at the transmitting/receiving antenna 101 is amplified at the amplifying section 102. The transmitting/receiving section 103 receives the uplink signal amplified at the amplifying section 102. The transmitting/receiving section 103 frequency-converts the received signal into the baseband signal to output the baseband signal to the baseband signal processing section 104.

The baseband signal processing section 104 performs the Fast Fourier Transform (FFT) process, an Inverse Discrete Fourier Transform (IDFT) process, error correction decoding, the receiving process of the MAC retransmission control, and the receiving process of the RLC layer and the PDCP layer on the user data included in the input uplink signal to forward the user data to the higher station apparatus 30 via the transmission path interface 106. The call processing section 105 performs call processes of, for example, configuration and release of a communication channel, state management of the radio base station 10, and management of the radio resource.

The transmission path interface 106 transmits and receives the signal to/from the higher station apparatus 30 via a predetermined interface. The transmission path interface 106 may transmit and receive (backhaul signaling) the signal to/from another radio base station 10 via the interface between the base stations (for example, the optical fiber and the X2 interface compliant to the Common Public Radio Interface (CPRI)).

The transmitting/receiving section 103 transmits the downlink signals to the user terminal 20 using at least the unlicensed band. For example, the transmitting/receiving section 103 transmits the DCI (UL grant) that allocates the PUSCH to the user terminal 20 and the DCI (DL assignment) to allocate the PDSCH to the user terminal 20.

The transmitting/receiving section 103 receives the uplink signals from the user terminal 20 using at least the unlicensed band. For example, the transmitting/receiving section 103 receives the PUSCH allocated by the DCI (UL grant) from the user terminal 20. The transmitting/receiving section 103 may receive results of the RRM measurement and/or the CSI measurement (for example, the A-CSI) from the user terminal 20 in the licensed band and/or the unlicensed band.

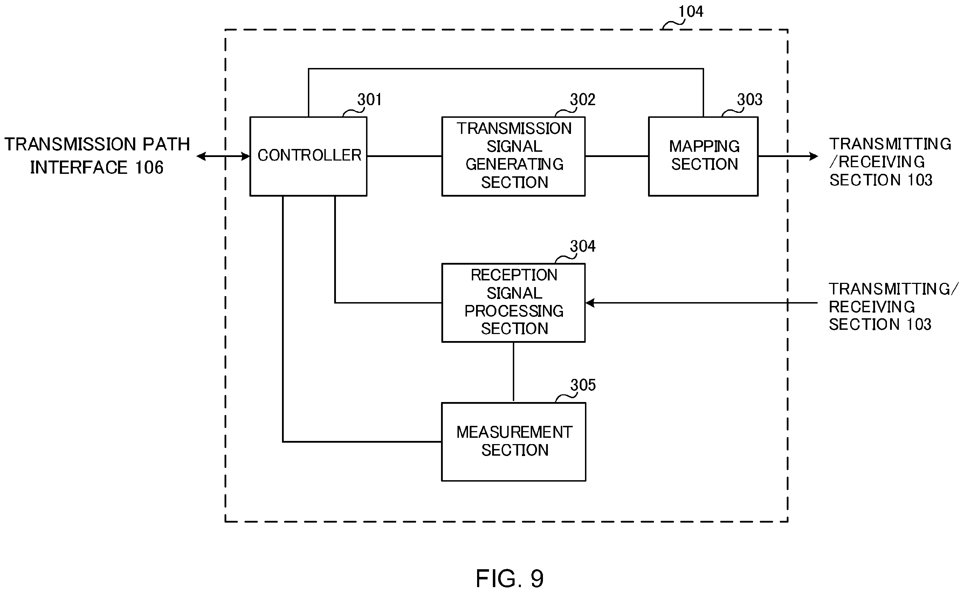

FIG. 9 is a drawing illustrating an exemplary function constitution of the radio base station FIG. 9 mainly illustrates a function block and it is assumed that the radio base station 10 also has other function blocks required for the radio communication. As illustrated in FIG. 9, the baseband signal processing section 104 at least includes a control section (scheduler) 301, a transmission signal generating section 302, a mapping section 303, a reception signal processing section 304, and a measurement section 305.

The control section (scheduler) 301 controls the entire radio base station 10. To execute the scheduling on the licensed band and the unlicensed band by the one control section (scheduler) 301, the control section 301 controls communications of the licensed band cells and the unlicensed band cells. The control section 301 may be a controller, a control circuit, or a control apparatus described based on the common view in the technical field according to the present invention.

The control section 301, for example, controls the generation of the downlink signals by the transmission signal generating section 302 and the allocation of the downlink signals by the mapping section 303. The control section 301 controls the receiving process of the signals by the reception signal processing section 304 and the measurement of the signals by the measurement section 305.

The control section 301 controls, for example, the scheduling, the generation, the mapping, and the transmission of the downlink signals (for example, the PDCCH/EPDCCH to transmit the system information and the DCI, the PDSCH, the downlink reference signal, and the synchronization signal). The control section 301 controls the LBT (listening) by the measurement section 305 and controls the transmission of the downlink signals to the transmission signal generating section 302 and the mapping section 303 in accordance with the LBT result.

The control section 301 controls, for example, the scheduling and reception of the uplink signals (PUSCH, PUCCH, PRACH, the uplink reference signal, and a similar signal).

Specifically, the control section 301 allocates the uplink resource used for the transmission of the PUSCH from the user terminal 20 by any one of the single cluster allocation (the type 0, the first allocation method) or the interlaced multi-cluster allocation (the type 2, the second allocation method) (first aspect).

The control section 301 controls the transmission signal generating section 302 and the mapping section 303 so as to transmit the DCI including the allocation information of the uplink resource (for example, the resource allocation field value). This DCI may include the type information (for example, a resource allocation type field value) indicative of the allocation type of the uplink resource. In the case where the uplink resource is allocated by the interlaced multi-cluster allocation, the control section 301 may set a value indicative of the dual cluster allocation as the type information.

The control section 301 may control the transmission signal generating section 302 such that this DCI includes the sub-frame information (second aspect), the listening information (third aspect), and the aperiodic CSI information (fourth aspect).

The transmission signal generating section 302 generates the downlink signals based on an instruction from the control section 301 to output the downlink signals to the mapping section 303. The transmission signal generating section 302 can be constituted of a signal generator, a signal generation circuit, or a signal generation apparatus described based on the common view in the technical field according to the present invention.

The transmission signal generating section 302, for example, generates the allocation information of the downlink resource (DL assignment) and the allocation information of the uplink resource (UL grant) based on the instruction from the control section 301. A coding process and a modulation process are executed on the downlink data signals in accordance with, for example, a code rate and a modulation scheme determined based on the result of the CSI measurement in the respective user terminals 20 and a similar result. The transmission signal generating section 302 generates the DRS including, for example, the PSS, the SSS, the CRS, and the CSI-RS.

The mapping section 303 maps the downlink signal generated at the transmission signal generating section 302 to a predetermined radio resource to output the downlink signal to the transmitting/receiving section 103, based on the instruction from the control section 301. The mapping section 303 can be constituted of a mapper, a mapping circuit, or a mapping apparatus described based on the common view in the technical field according to the present invention.

The reception signal processing section 304 executes the receiving process (for example, a demapping, the demodulation, and the decoding) on the received signal input from the transmitting/receiving section 103. Here, the received signal is, for example, the uplink signal transmitted from the user terminal 20. The reception signal processing section 304 can be constituted of a signal processor, a signal processing circuit, or a signal processing apparatus described based on the common view in the technical field according to the present invention.

The reception signal processing section 304 outputs the information decoded by the receiving process to the control section 301. For example, when the reception signal processing section 304 receives the PUCCH including the HARQ-ACK, the reception signal processing section 304 outputs the HARQ-ACK to the control section 301. The reception signal processing section 304 outputs the received signal and the signal after the receiving process to the measurement section 305.

The measurement section 305 executes the measurement regarding the received signal. The measurement section 305 can be constituted of a measuring instrument, a measuring circuit, or a measuring apparatus described based on the common view in the technical field according to the present invention.

The measurement section 305 executes the LBT (listening) in the carrier (for example, the unlicensed band) where the LBT is configured based on the instruction from the control section 301 and outputs the LBT result (for example, a judgment result whether the channel state is idle or busy) to the control section 301.

The measurement section 305 may measure, for example, the received electric power of the received signal (for example, a Reference Signal Received Power (RSRP)), a reception quality (for example, a Reference Signal Received Quality (RSRQ)), and the channel state. The measurement result may be output to the control section 301.

### <User Terminal>

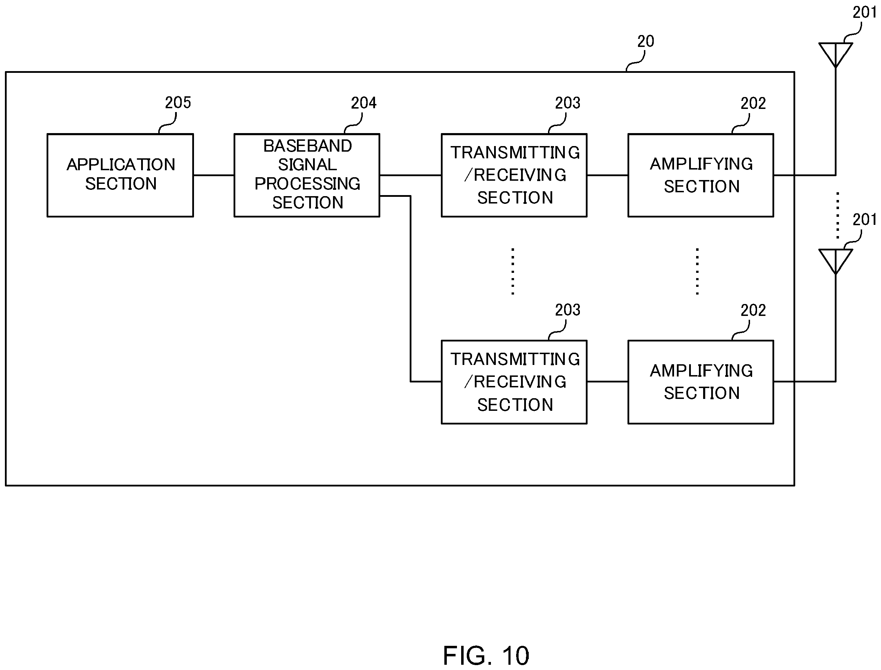

FIG. 10 is a drawing illustrating an exemplary overall constitution of the user terminal according to the embodiment. The user terminal 20 includes a plurality of transmitting/receiving antennas 201, amplifying sections 202, and transmitting/receiving sections 203, a baseband signal processing section 204, and an application section 205. It is only necessary to include one or more of the respective transmitting/receiving antenna 201, amplifying section 202, and transmitting/receiving section 203.

The radio frequency signals received at the transmitting/receiving antenna 201 are amplified at the amplifying sections 202. The transmitting/receiving sections 203 receive the downlink signals amplified at the amplifying sections 202. The transmitting/receiving section 203 frequency-converts the received signal into the baseband signal to output the baseband signal to the baseband signal processing section 204. The transmitting/receiving section 203 can transmit/receive the uplink/downlink signals in the unlicensed band. The transmitting/receiving section 203 may be able to transmit/receive the uplink/downlink signals in the licensed band.

The transmitting/receiving section 203 can be constituted of a transmitter/receiver, a transmitting/receiving circuit, or a transmitting/receiving apparatus described based on the common view in the technical field according to the present invention. The transmitting/receiving section 203 may be constituted as an integrated transmitting/receiving section, and may be constituted of the transmitting section and the receiving section.

The baseband signal processing section 204 performs, for example, an FFT process, the error correction decoding, and the receiving process of the retransmission control, with respect to the input baseband signal. The user data in the downlink is forwarded to the application section 205. The application section 205 performs, for example, a process regarding a layer upper than a physical layer and a MAC layer. Among the data in the downlink, the notification information is also forwarded to the application section 205.

On the other hand, the user data in the uplink is input to the baseband signal processing section 204 from the application section 205. At the baseband signal processing section 204, for example, the transmitting process of the retransmission control (for example, the transmitting process of the HARQ), the channel coding, the precoding, a Discrete Fourier Transform (DFT) process, and an IFFT process are performed to forward the user data to the transmitting/receiving sections 203. The transmitting/receiving section 203 converts the baseband signal output from the baseband signal processing section 204 into the radio frequency band to transmit. The radio frequency signal frequency-converted at the transmitting/receiving section 203 is amplified at the amplifying section 202 to be transmitted from the transmitting/receiving antenna 201.

The transmitting/receiving section 203 receives the downlink signal transmitted from the radio base station 10 using at least the unlicensed band. For example, the transmitting/receiving section 203 receives the measurement reference signal in the unlicensed band.

The transmitting/receiving section 203 transmits the uplink signal to the radio base station 10 using at least the unlicensed band. For example, the transmitting/receiving section 203 may transmit the PUSCH using the uplink resource allocated by the DCI (UL grant). The transmitting/receiving section 203 may transmit the CSI instructed by the A-CSI trigger in the DCI (UL grant).

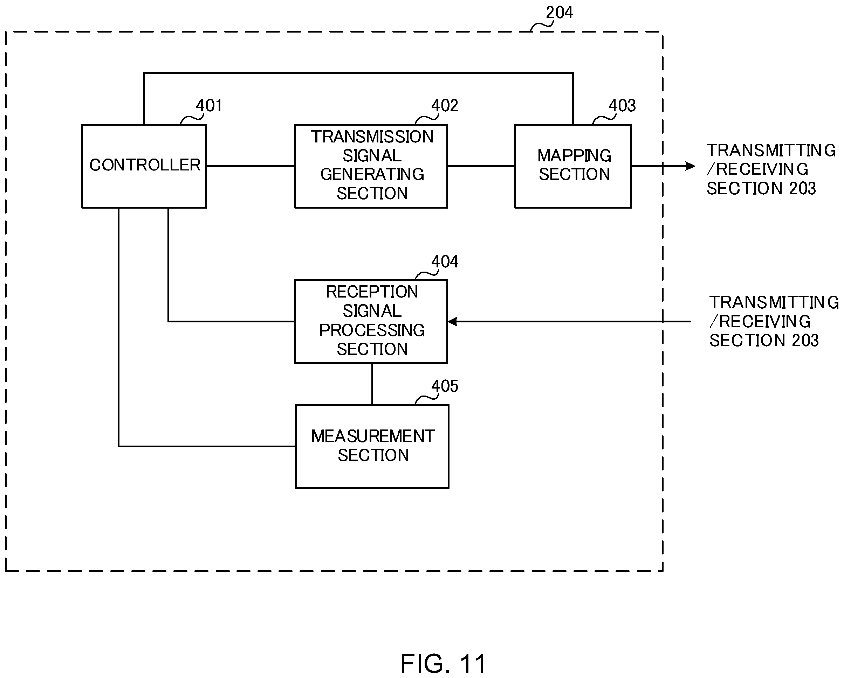

FIG. 11 is a drawing illustrating an exemplary function constitution of the user terminal FIG. 11 mainly illustrates a function block and it is assumed that the user terminal 20 also has other function blocks required for the radio communication. As illustrated in FIG. 11, the baseband signal processing section 204 included in the user terminal 20 at least includes a control section 401, a transmission signal generating section 402, a mapping section 403, a reception signal processing section 404, and a measurement section 405.

The control section 401 controls the entire user terminal 20. The control section 401 can be constituted of a controller, a control circuit, or a control apparatus described based on the common view in the technical field according to the present invention.

The control section 401, for example, controls the generation of the uplink signal by the transmission signal generating section 402 and the allocation of the uplink signals by the mapping section 403. The control section 401 controls the receiving process of the downlink signal by the reception signal processing section 404 and the measurement of the signal by the measurement section 405.

The control section 401 obtains the downlink signals (the PDCCH/EPDCCH, the PDSCH, the downlink reference signal, the synchronization signal, and a similar signal) transmitted from the radio base station 10 from the reception signal processing section 404. The control section 401 controls generation of the uplink control signal (for example, the PUCCH and the PUSCH) based on the decoding results of the DCI included in the PDCCH/EPDCCH (downlink control signal) and the PDSCH (downlink data signal).

The control section 401 may control the transmission of the uplink signal on the transmission signal generating section 402 and the mapping section 403 in accordance with the LBT result obtained by the measurement section 405.

Specifically, the control section 401 determines the uplink resource allocated by any one of the single cluster allocation (the type 0, the first allocation method) or the interlaced multi-cluster allocation (the type 2, the second allocation method) based on the allocation information in the DCI (for example, the resource allocation field value) (first aspect).

The control section 401 may judge whether the uplink resource is allocated by any one of allocation methods, the type 0 or 2, based on the type information in the DCI (for example, the resource allocation type field value) to interpret the allocation information in the DCI based on the judgement result. For example, when the type information in the DCI indicates the dual cluster allocation (the type 1, the third allocation method), the control section 401 may determine that the uplink resource is allocated by the type 2.

When the uplink resource is allocated by the type 2, the control section 401 may determine the start position of the first cluster, the sizes of the respective clusters, the arrangement interval between the respective clusters, and the total transmission bandwidth used for the transmission of the PUSCH based on the allocation information in the DCI (for example, the resource allocation field value).

Here, the allocation information of the type 2 may indicate the first and the second index values (S₀, S₁), which indicate the start and the end positions of the first cluster, the third index value (S₂), which indicates the start position of the second cluster, and the fourth index value (S₃), which indicates the end position of the last cluster (FIG. 3). In this case, the control section 401 may determine the start position of the first cluster by the first index value (S₀), may determine the cluster size based on the difference between the second index value and the first index value (S₁ - S₀), may determine the cluster interval based on the difference between the third index value and the first index value (S₂ - S₀), and may determine the total transmission bandwidth based on the difference between the fourth index value and the first index value (S₃ - S₀).

Alternatively, the allocation information of the type 2 may indicate the first and the second index values (S₀, S₁), which indicate the start and the end positions of the first cluster, and the third index value (S₂), which indicates the start position of the second cluster (FIG. 4B). In this case, the control section 401 may determine the predetermined fixed value to the total transmission bandwidth (for example, 20 MHz).

Alternatively, the allocation information of the type 2 may indicate the first and the second index values (S₀, S₁), which indicate the start and the end positions of the first cluster, the third index value (S₂), which indicates the start position of the second cluster, and a value selected from the plurality of candidate values of the total transmission bandwidth (for example, 4 MHz, 5 MHz, 10 MHz, 15 MHz, and 20 MHz) (FIG. 4B). In this case, the control section 401 may determine this selected value as the total transmission bandwidth.

When the uplink resource is allocated by the type 0, the control section 401 may determine the start position of the single cluster and the transmission bandwidth based on the allocation information in the DCI (for example, the resource allocation field value).

Here, the allocation information of the type 0 may indicate the index value (RB_{START}), which indicates the start position of the single cluster, and the length of this single cluster (cluster length) (L_{CRBs}) (FIG. 1A). In this case, the control section 401 may determine the start position of the single cluster by the index value (RB_{START}) and may determine the transmission bandwidth by the cluster length (L_{CRBs}).

Alternatively, the allocation information of the type 0 may indicate the index value (RB_{START}), which indicates the start position of the single cluster (FIG. 4A). In this case, the control section 401 may determine the predetermined fixed value as the total transmission bandwidth (for example, 4 MHz).

Alternatively, the allocation information of the type 0 may indicate the index value (RB_{START}), which indicates the start position of the single cluster, and the value selected from the plurality of candidate values of the total transmission bandwidth (for example, 4 MHz, 5 MHz, 10 MHz, 15 MHz, and 20 MHz) (FIG. 4A). In this case, the control section 401 may determine this selected value as the total transmission bandwidth.

The control section 401 may control the transmission of the PUSCH in the one or more consecutive sub-frames indicated by the sub-frame information in the DCI (second aspect). In this case, the control section 401 may control the transmission signal generating section 402 and the mapping section 403 such that the PUSCH is transmitted using the identical uplink resource determined as described above in these one or more consecutive sub-frames.

The control section 401 may control the listening based on the listening information in the DCI (third aspect). Specifically, the control section 401 may control the listening by the measurement section 305 based on at least one of the random back-off value, the CW window size, the threshold of the electric power detection, and the type information of listening.

The control section 401 may control the aperiodic CSI reporting based on the aperiodic CSI information in the DCI (fourth aspect). Specifically, the control section 401 may control the transmission signal generating section 402 and the mapping section 403 such that the CSI is reported to the cell indicated by the aperiodic CSI information.

The control section 401 controls the reception signal processing section 404 and the measurement section 405 such that the RRM is measured and/or the CSI is measured using the measurement reference signal in the unlicensed band. The RRM may be measured using the DRS. This measurement reference signal may be any one of the CSI or the CSI-RS included in the CRS, the CSI-RS, and the DRS.

The transmission signal generating section 402 generates the uplink signal (for example, the PUSCH, the PUCCH, and the uplink reference signal) based on the instruction from the control section 401 and outputs the uplink signal to the mapping section 403. The transmission signal generating section 402 can be constituted of a signal generator, a signal generation circuit, or a signal generation apparatus described based on the common view in the technical field according to the present invention. For example, when the downlink control signal from the radio base station 10 includes the DCI (UL grant) addressed to the user terminal 20, the control section 401 instructs the generation of the PUSCH to the transmission signal generating section 402.

The mapping section 403 maps the uplink signal generated by the transmission signal generating section 402 to a radio resource and outputs the uplink signal to the transmitting/receiving section 203 based on the instruction from the control section 401. The mapping section 403 can be constituted of a mapper, a mapping circuit, or a mapping apparatus described based on the common view in the technical field according to the present invention.

The reception signal processing section 404 executes the receiving process (for example, the demapping, the demodulation, and the decoding) on the received signal input from the transmitting/receiving section 203. Here, the received signal is, for example, the downlink signal transmitted from the radio base station 10. The reception signal processing section 404 can be constituted of a signal processor, a signal processing circuit, or a signal processing apparatus described based on the common view in the technical field according to the present invention. The reception signal processing section 404 can constitute the receiving section according to the present invention.

The reception signal processing section 404 outputs the information decoded by the receiving process to the control section 401. The reception signal processing section 404 outputs, for example, the notification information, the system information, the RRC signaling, and the DCI to the control section 401. The reception signal processing section 404 outputs the received signal and the signal after the receiving process to the measurement section 405.

The measurement section 405 executes the measurement regarding the received signal. The measurement section 405 can be constituted of a measuring instrument, a measuring circuit, or a measuring apparatus described based on the common view in the technical field according to the present invention.

The measurement section 405 may execute the LBT in the carrier (for example, the unlicensed band) where the LBT is configured based on the instruction from the control section 401. The measurement section 405 may output the LBT result (for example, a judgment result whether the channel state is idle or busy) to the control section 401.

The measurement section 405 executes the RRM measurement and the CSI measurement in accordance with the instruction from the control section 401. For example, the measurement section 405 measures the CSI using the measurement reference signal (any one of the CRS, CSI-RS, CRS included in DRS, or CSI-RS for CSI measurement arranged in the transmission sub-frame for DRS). The measurement result is output to the control section 401 and is transmitted from the transmitting/receiving section 103 using PUSCH or PUCCH.

### <Hardware Constitution>

The block diagrams used for the description of the above-described embodiment illustrate blocks by functions. These function blocks (constitution sections) are implemented with an optional combination of hardware and/or software. An implementation means of each function block is not specifically limited. That is, each function block may be implemented with physically-bounded one apparatus, and by coupling physically-separate two or more apparatuses with wire or without wire, each function block may be implemented with these plurality of apparatuses.

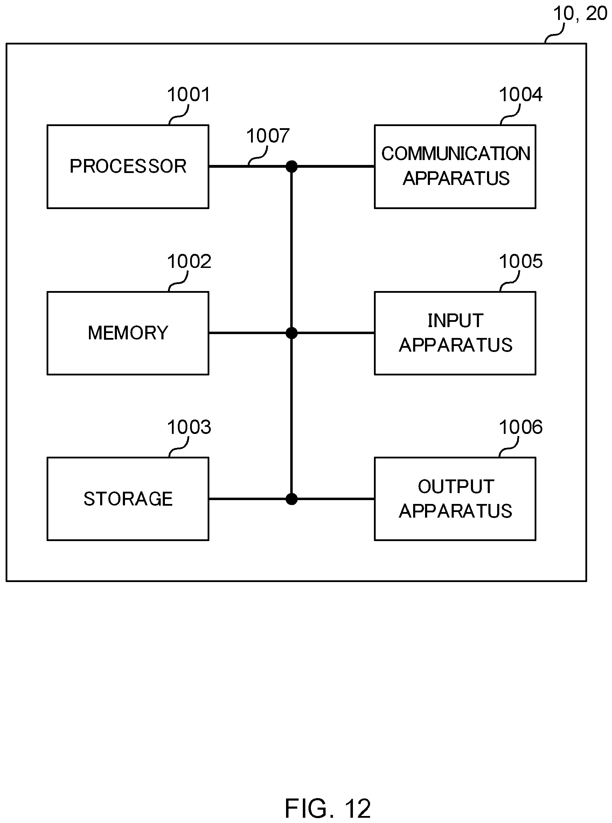

For example, the radio base station, the user terminal, and the like in the one embodiment of the present invention may function as computers that perform the processes of the radio communication method of the present invention. FIG. 12 is a drawing illustrating an exemplary hardware constitution of the radio base station and the user terminal according to the one embodiment of the present invention. The above-described radio base station 10 and user terminal 20 may be physically constituted as a computer apparatus including, for example, a processor 1001, a memory 1002, a storage 1003, a communication apparatus 1004, an input apparatus 1005, an output apparatus 1006, and a bus 1007.

In the following description, the word "an apparatus" can be reworded to, for example, a circuit, a device, and a unit. The hardware constitution of the radio base station 10 and the user terminal 20 may include one or more of each apparatus illustrated in the drawing, and may be constituted without a part of the apparatuses.

Each function in the radio base station 10 and the user terminal 20 is achieved such that the processor 1001 performs arithmetic operation such that predetermined software (program) is read into the hardware such as the processor 1001 and the memory 1002, to control communication by the communication apparatus 1004 and reading and/or writing of data in the memory 1002 and the storage 1003.

The processor 1001, for example, operates an operating system to control the computer as a whole. The processor 1001 may be constituted of a Central Processing Unit (CPU) including, for example, an interface with peripheral apparatuses, a control apparatus, an arithmetic apparatus, and a register. For example, the above-described baseband signal processing section 104 (204), call processing section 105, and the like may be implemented with the processor 1001.

The processor 1001 reads out a program (program code), a software module, and data from the storage 1003 and/or the communication apparatus 1004 to the memory 1002, and then performs various processes in accordance with them. As the program, a program that causes the computer to execute at least a part of the operation described in the above-described embodiment is used. For example, the control section 401 of the user terminal 20 may be stored in the memory 1002 to be achieved by a control program that operates in the processor 1001. Other function blocks may be similarly achieved.

The memory 1002, which is a computer readable recording medium, may be constituted of, for example, at least one of a Read Only Memory (ROM), an Erasable Programmable ROM (EPROM), and a Random Access Memory (RAM). The memory 1002 may be also referred to as, for example, a register, a cache, and a main memory (main storage unit). The memory 1002 can store, for example, a program (program code) and a software module executable for performing the radio communication method.

The storage 1003, which is a computer readable recording medium, may be constituted of, for example, at least one of an optical disk such as a Compact Disc ROM (CD-ROM), a hard disk drive, a flexible disk, a magneto-optic disk, and a flash memory. The storage 1003 may be referred to as an auxiliary storage unit.

The communication apparatus 1004, which is hardware (transmitting/receiving device) for communicating between the computers via wired and/or wireless network, is in other words, for example, a network device, a network controller, a network card, and a communication module. For example, the above-described transmitting/receiving antenna 101 (201), amplifying section 102 (202), transmitting/receiving section 103 (203), and transmission path interface 106, may be implemented with the communication apparatus 1004.

The input apparatus 1005 is an input device (for example, a keyboard and a computer mouse) that accepts input from outside. The output apparatus 1006 is an output device (for example, a display and a speaker) that performs an output to the outside. The input apparatus 1005 and the output apparatus 1006 may have an integral constitution (for example, a touch panel).

The respective apparatuses such as the processor 1001 and the memory 1002 are coupled by the bus 1007 for communicating information. The bus 1007 may be constituted of a single bus, and may be constituted of different buses between the apparatuses.

The radio base station 10 and the user terminal 20 may be constituted including the hardware such as a microprocessor, a Digital Signal Processor (DSP), an Application Specific Integrated Circuit (ASIC), a Programmable Logic Device (PLD), and a Field Programmable Gate Array (FPGA). This hardware may implement a part of or all the respective function blocks. For example, the processor 1001 may be implemented with at least one of this hardware.

The terms described in this description and/or the terms required for understanding this description may be replaced by terms having identical or similar meaning. For example, the channel and/or the symbol may be a signal (signaling). The signal may be a message. The Component Carrier (CC) may be also referred to as, for example, a cell, a frequency carrier, and a carrier frequency.

The radio frame may be constituted of one or more periods (frames) in the time domain. Each of this one or more periods (frames) that constitute the radio frame may be referred to as a sub-frame. Furthermore, the sub-frame may be constituted of one or more slots in the time domain. Furthermore, the slot may be constituted of one or more symbols (for example, OFDM symbols and SC-FDMA symbols) in the time domain.

The radio frame, the sub-frame, the slot, and the symbol each represent a time unit to transmit the signal. For the radio frame, the sub-frame, the slot, and the symbol, another name corresponding to each of them may be used. For example, one sub-frame may be referred to as a Transmission Time Interval (TTI), a plurality of consecutive sub-frames may be referred to as a TTI, and one slot may be referred to as a TTI. That is, the sub-frame or the TTI may be a sub-frame (1 ms) in the existing LTE, may be a period shorter than 1 ms (for example, one to 13 symbols), and may be a period longer than 1 ms.

Here, the TTI is, for example, a minimum time unit of scheduling in the radio communication. For example, in the LTE system, the radio base station performs scheduling that allocates the radio resource (for example, a frequency bandwidth and transmission power available for each user terminal) in a unit of TTI, with respect to each user terminal. The definition of the TTI is not limited to this.

The TTI with a time length of 1 ms may be referred to as, for example, a basic TTI (TTI in LTE Rel.8 to 12), a normal TTI, a long TTI, a basic sub-frame, a normal sub-frame, or a long sub-frame. The TTI shorter than the basic TTI may also be referred to as, for example, a reduced TTI, a short TTI, a reduced sub-frame, or a short sub-frame.

The Resource Block (RB), which is a resource allocation unit in the time domain and the frequency domain, may include one or more consecutive subcarriers in the frequency domain. The RB may include one or more symbols in the time domain, and may be a length of one slot, one sub-frame, or one TTI. One TTI and one sub-frame each may be constituted of one or more resource blocks. The RB may be referred to as, for example, a Physical Resource Block (Physical RB (PRB)), a PRB pair, and a RB pair.

The resource block may be constituted of one or more Resource Elements (REs). For example, one RE may be a radio resource region of one subcarrier and one symbol.

The above-described structures of the radio frame, the sub-frame, the slot, the symbol, and the like are only illustrative. For example, the number of the sub-frames included in the radio frame, the number of the slots included in the sub-frame, the number of the symbols and the RBs included in the slot, the number of the subcarriers included in the RB, and the constitution such as the number of the symbols, the symbol length, and the Cyclic Prefix (CP) length within the TTI can be variously changed.

For example, the information and the parameter described in this description may be represented by absolute values, may be represented by relative values from predetermined values, and may be represented by corresponding other information. For example, the radio resource may be instructed by a predetermined index.

For example, the information and the signal described in this description may be represented using any of various different techniques. For example, the data, the order, the command, the information, the signal, the bit, the symbol, and the chip mentionable over the above-described entire description may be represented by voltage, current, electromagnetic wave, magnetic field or magnetic particle, optical field or photon, or an optional combination of them.

For example, the software, the order, and the information may be transmitted and received via a transmission medium. For example, when the software is transmitted from a website, a server, or another remote source using wired techniques (for example, a coaxial cable, an optical fiber cable, a twisted pair, and a digital subscriber line (DSL)) and/or wireless techniques (for example, infrared and microwave), these wired techniques and/or wireless techniques are included in the definition of the transmission medium.

The radio base station in this description may be reworded to the user terminal. For example, the respective aspects/embodiments of the present invention may be applied to a constitution where the communication between the radio base station and the user terminal is replaced by communication between a plurality of user terminals (Device-to-Device (D2D)). In this case, the user terminal 20 may have the above-described functions that the radio base station 10 has. The words such as "uplink" and "downlink" may be reworded to "side." For example, the uplink channel may be reworded to the side channel.

Similarly, the user terminal in this description may be reworded to the radio base station. In this case, the radio base station 10 may have the above-described functions that the user terminal 20 has.

The respective aspects/embodiments described in this description may be used alone, may be used in combination, and may be used by switching in accordance with execution. The notification of the predetermined information (for example, the notification "being X") is not limited to explicit execution, and may be implicit execution (for example, by not performing the notification of this predetermined information).

The notification of the information is not limited to the aspects/embodiments described in this description, and may be performed by another method. For example, the notification of the information may be performed by physical layer signaling (for example, Downlink Control Information (DCI) and Uplink Control Information (UCI)), the upper layer signaling (for example, Radio Resource Control (RRC) signaling, the notification information (for example, Master Information Block (MIB) and System Information Block (SIB)), and Medium Access Control (MAC) signaling), another signal, or these combination. The RRC signaling may be referred to as a RRC message, for example, and may be RRCConnectionSetup message and RRCConnectionReconfiguration message. The MAC signaling may be notified by, for example, a MAC Control Element (CE).

The respective aspects/embodiments described in this description may be applied to a system that uses Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), Radio Access Technology (New-RAT), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and another appropriate radio communication method, and/or a next generation system extended based on them.

## Claims

1. A terminal (20) in a cell to which listening is executed before transmission, the terminal (20) comprising:
a receiving section (203) adapted to receive downlink control information including information regarding allocation of a transmission unit configured of a plurality of resource blocks;
a control section (401) adapted to determine a resource allocation based on the information regarding the allocation; and
a transmitting section (203) adapted to transmit a physical uplink shared channel using the resource allocation,
wherein the downlink control information includes information regarding a type of the listening, and
wherein the type of listening includes:
a first listening type in which, when a channel is unusable upon executing listening, a listening time is extended and listening is continuously executed until the channel becomes usable, and
a second listening type in which transmission is carried out when the channel is usable upon executing listening for a certain period of time.

2. The terminal (20) according to claim 1, wherein
the control section (401) is adapted to determine a start position of a first resource block, and start positions of other resource blocks based on the information regarding allocation.

3. The terminal (20) according to claim 1 or 2, wherein
a total transmission bandwidth used for transmission of the uplink shared channel is restricted to one of a plurality of candidate values.

4. The terminal (20) according to any one of claims 1 to 3, wherein
the downlink control information includes sub-frame information, the sub-frame information indicating one or more sub-frames to transmit the uplink shared channel.

5. The terminal (20) according to any one of claims 1 to 4, wherein
the downlink control information includes information regarding a size of a contention window.

6. A radio communication method by a terminal (20) in a cell that executes listening before transmission, the radio communication method comprising:
receiving downlink control information including information regarding allocation of a transmission unit configured of a plurality of resource blocks;
determining a resource allocation based on the information regarding the allocation; and
transmitting an uplink shared channel using the resource allocation,
wherein the downlink control information includes information regarding a type of the listening, and wherein the type of listening includes: a first listening type in which, when a channel is unusable upon executing listening, a listening time is extended and listening is continuously executed until the channel becomes usable, and a second listening type in which transmission is carried out when the channel is usable upon executing listening for a certain period of time.

7. A base station (10) which communicates with a terminal (20), in a cell to which listening is executed before transmission, the base station (10) comprising:
a transmitting section (103) adapted to transmit downlink control information including information regarding allocation of a transmission unit configured of a plurality of resource blocks; and
a receiving section (103) adapted to receive a physical uplink shared channel transmitted using a resource allocation that is determined base on the information regarding the allocation,
wherein the downlink control information includes information regarding a type of the listening, and
wherein the type of listening includes:
a first listening type in which, when a channel is unusable upon executing listening, a listening time is extended and listening is continuously executed until the channel becomes usable, and
a second listening type in which transmission is carried out when the channel is usable upon executing listening for a certain period of time.

8. A system comprising a terminal (20) in a cell to which listening is executed before transmission and a base station (10), wherein:
the base station (10), comprises:
a transmitting section (103) adapted to transmit downlink control information including information regarding allocation of a transmission unit configured of a plurality of resource blocks, and
the terminal (20) comprises:
a receiving section (203) adapted to receive the downlink control information; and
a control section (401) adapted to determine a resource allocation based on the information regarding the allocation,
a transmitting section (203) adapted to transmit a physical uplink shared channel using the resource allocation,
wherein the downlink control information includes information regarding a type of the listening, and
wherein the type of listening includes:
a first listening type in which, when a channel is unusable upon executing listening, a listening time is extended and listening is continuously executed until the channel becomes usable, and
a second listening type in which transmission is carried out when the channel is usable upon executing listening for a certain period of time.

## Patentansprüche

1. Endgerät (20) in einer Zelle, in der vor dem Senden ein Abhören durchgeführt wird, wobei das Endgerät (20) Folgendes umfasst:
einen Empfangsabschnitt (203), der so ausgelegt ist, dass er Downlink-Steuerinformationen empfängt, die Informationen bezüglich der Zuweisung einer aus einer Vielzahl von Ressourcenblöcken konfigurierten Sendeeinheit einschließen;
einen Steuerabschnitt (401), der so ausgelegt ist, dass er eine Ressourcenzuweisung basierend auf den Informationen bezüglich der Zuweisung bestimmt; und
einen Sendeabschnitt (203), der so ausgelegt ist, dass er einen physikalischen gemeinsamen Uplink-Kanal unter Verwendung der Ressourcenzuweisung sendet,
wobei die Downlink-Steuerinformationen Informationen bezüglich einer Art des Abhörens einschließen, und
wobei die Art des Abhörens einschließt:
eine erste Art des Abhörens, bei der, wenn ein Kanal beim Durchführen des Abhörens nicht nutzbar ist, eine Abhörzeit verlängert wird und das Abhören kontinuierlich durchgeführt wird, bis der Kanal nutzbar wird, und
eine zweite Art des Abhörens, bei der das Senden erfolgt, wenn der Kanal beim Durchführen des Abhörens während einer bestimmten Zeitspanne nutzbar ist.

2. Endgerät (20) nach Anspruch 1, wobei
der Steuerabschnitt (401) so ausgelegt ist, dass er eine Startposition eines ersten Ressourcenblocks und Startpositionen anderer Ressourcenblöcke basierend auf den Informationen bezüglich der Zuweisung bestimmt.

3. Endgerät (20) nach Anspruch 1 oder 2, wobei
eine Gesamtübertragungsbandbreite, die für das Senden des gemeinsamen Uplink-Kanals verwendet wird, auf einen aus einer Vielzahl von Kandidatenwerten beschränkt ist.

4. Endgerät (20) nach einem der Ansprüche 1 bis 3, wobei
die Downlink-Steuerinformationen Teilrahmeninformationen einschließen, wobei die Teilrahmeninformationen einen oder mehrere Teilrahmen zum Senden des gemeinsamen Uplink-Kanals angeben.

5. Endgerät (20) nach einem der Ansprüche 1 bis 4, wobei
die Downlink-Steuerinformationen Informationen bezüglich der Größe eines Konfliktfensters einschließen.

6. Funkkommunikationsverfahren durch ein Endgerät (20) in einer Zelle, die vor dem Senden ein Abhören durchführt, wobei das Funkkommunikationsverfahren umfasst:
Empfangen von Downlink-Steuerinformationen, die Informationen bezüglich der Zuweisung einer aus einer Vielzahl von Ressourcenblöcken konfigurierten Sendeeinheit enthalten;
Bestimmen einer Ressourcenzuweisung basierend auf den Informationen bezüglich der Zuweisung; und
Senden eines gemeinsamen Uplink-Kanals unter Verwendung der Ressourcenzuweisung,
wobei die Downlink-Steuerinformationen Informationen bezüglich einer Art des Abhörens enthalten, und wobei die Art des Abhörens Folgendes einschließt: eine erste Art des Abhörens, bei der, wenn ein Kanal beim Durchführen des Abhörens nicht nutzbar ist, eine Abhörzeit verlängert wird und das Abhören kontinuierlich durchgeführt wird, bis der Kanal nutzbar wird, und eine zweite Art des Abhörens, bei der das Senden erfolgt, wenn der Kanal beim Durchführen des Abhörens während einer bestimmten Zeitspanne nutzbar ist.

7. Basisstation (10), die mit einem Endgerät (20) in einer Zelle kommuniziert, in der vor dem Senden ein Abhören durchgeführt wird, wobei die Basisstation (10) Folgendes umfasst:
einen Sendeabschnitt (103), der so ausgelegt ist, dass er Downlink-Steuerinformationen sendet, die Informationen bezüglich der Zuweisung einer aus einer Vielzahl von Ressourcenblöcken konfigurierten Sendeeinheit einschließen; und
einen Empfangsabschnitt (103), der so ausgelegt ist, dass er einen gemeinsamen physikalischen Uplink-Kanal empfängt, der unter Verwendung einer Ressourcenzuweisung gesendet wird, die basierend auf den Informationen bezüglich der Zuweisung bestimmt wird,
wobei die Downlink-Steuerinformationen Informationen bezüglich einer Art des Abhörens einschließen, und
wobei die Art des Abhörens einschließt:
eine erste Art des Abhörens, bei der, wenn ein Kanal beim Durchführen des Abhörens nicht nutzbar ist, eine Abhörzeit verlängert wird und das Abhören kontinuierlich durchgeführt wird, bis der Kanal nutzbar wird, und
eine zweite Art des Abhörens, bei der das Senden erfolgt, wenn der Kanal beim Durchführen des Abhörens während einer bestimmten Zeitspanne nutzbar ist.

8. System umfassend ein Endgerät (20) in einer Zelle, in der vor dem Senden ein Abhören durchgeführt wird, und eine Basisstation (10), wobei
die Basisstation (10) umfasst:
einen Sendeabschnitt (103), der so ausgelegt ist, dass er Downlink-Steuerinformationen sendet, die Informationen bezüglich der Zuweisung einer aus einer Vielzahl von Ressourcenblöcken konfigurierten Sendeeinheit einschließen, und
das Endgerät (20) umfasst:
einen Empfangsabschnitt (203), der so ausgelegt ist, dass er die Downlink-Steuerinformationen empfängt; und
einen Steuerabschnitt (401), der so ausgelegt ist, dass er eine Ressourcenzuweisung basierend auf den Informationen bezüglich der Zuweisung bestimmt,
einen Sendeabschnitt (203), der so ausgelegt ist, dass er einen physikalischen gemeinsamen Uplink-Kanal unter Verwendung der Ressourcenzuweisung sendet,
wobei die Downlink-Steuerinformationen Informationen bezüglich einer Art des Abhörens einschließen, und
wobei die Art des Abhörens einschließt:
eine erste Art des Abhörens, bei der, wenn ein Kanal beim Durchführen des Abhörens nicht nutzbar ist, eine Abhörzeit verlängert wird und das Abhören kontinuierlich durchgeführt wird, bis der Kanal nutzbar wird, und
eine zweite Art des Abhörens, bei der das Senden erfolgt, wenn der Kanal beim Durchführen des Abhörens während einer bestimmten Zeitspanne nutzbar ist.

## Revendications

1. Terminal (20) dans une cellule dans laquelle une écoute est exécutée avant une transmission, le terminal (20) comprenant :
une section de réception (203) conçue pour recevoir des informations de commande de liaison descendante incluant des informations concernant l'allocation d'une unité de transmission configurée d'une pluralité de blocs de ressources ;
une section de commande (401) conçue pour déterminer une allocation de ressources basée sur les informations concernant l'allocation ; et
une section de transmission (203) conçue pour transmettre un canal partagé en liaison montante physique à l'aide de l'allocation de ressources,
dans lequel les informations de commande de liaison descendante incluent des informations concernant un type de l'écoute, et
dans lequel le type d'écoute inclut :
un premier type d'écoute dans lequel, lorsqu'un canal est inutilisable lors de l'exécution d'une écoute, un temps d'écoute est prolongé et l'écoute est exécutée de manière continue jusqu'à ce que le canal soit utilisable, et
un second type d'écoute dans lequel une transmission est réalisée lorsque le canal est utilisable lors de l'exécution d'une écoute pendant une certaine période de temps.

2. Terminal (20) selon la revendication 1, dans lequel
la section de commande (401) est conçue pour déterminer une position de départ d'un premier bloc de ressources et des positions de départ d'autres blocs de ressources sur la base des informations concernant une allocation.

3. Terminal (20) selon la revendication 1 ou 2, dans lequel
une largeur de bande de transmission totale utilisée pour une transmission du canal partagé en liaison montante est limitée à une valeur candidate d'une pluralité de valeurs candidates.

4. Terminal (20) selon l'une quelconque des revendications 1 à 3, dans lequel
les informations de commande de liaison descendante incluent des informations de sous-trame, les informations de sous-trame indiquant une ou plusieurs sous-trames pour transmettre le canal partagé en liaison montante.

5. Terminal (20) selon l'une quelconque des revendications 1 à 4, dans lequel
les informations de commande de liaison descendante incluent des informations concernant une taille d'une fenêtre de contention.

6. Procédé de communication radio par un terminal (20) dans une cellule qui exécute une écoute avant une transmission, le procédé de communication radio comprenant :
la réception d'informations de commande de liaison descendante incluant des informations concernant l'allocation d'une unité de transmission configurée d'une pluralité de blocs de ressources ;
la détermination d'une allocation de ressources basée sur les informations concernant l'allocation ; et
la transmission d'un canal partagé en liaison montante à l'aide de l'allocation de ressources,
dans lequel les informations de commande de liaison descendante incluent des informations concernant un type de l'écoute et dans lequel le type d'écoute inclut : un premier type d'écoute dans lequel, lorsqu'un canal est inutilisable lors de l'exécution d'une écoute, un temps d'écoute est prolongé et l'écoute est exécutée de manière continue jusqu'à ce que le canal soit utilisable, et un second type d'écoute dans lequel une transmission est réalisée lorsque le canal est utilisable lors de l'exécution d'une écoute pendant une certaine période de temps.

7. Station de base (10) qui communique avec un terminal (20) dans une cellule dans laquelle une écoute est exécutée avant une transmission, la station de base (10) comprenant :
une section de transmission (103) conçue pour transmettre des informations de commande de liaison descendante incluant des informations concernant l'allocation d'une unité de transmission configurée d'une pluralité de blocs de ressources ; et
une section de réception (103) conçue pour recevoir un canal partagé en liaison montante physique transmis à l'aide d'une allocation de ressources qui est déterminée sur la base des informations concernant l'allocation,
dans lequel les informations de commande de liaison descendante incluent des informations concernant un type de l'écoute, et
dans lequel le type d'écoute inclut :
un premier type d'écoute dans lequel, lorsqu'un canal est inutilisable lors de l'exécution d'une écoute, un temps d'écoute est prolongé et l'écoute est exécutée de manière continue jusqu'à ce que le canal soit utilisable, et
un second type d'écoute dans lequel une transmission est réalisée lorsque le canal est utilisable lors de l'exécution d'une écoute pendant une certaine période de temps.

8. Système comprenant un terminal (20) dans une cellule dans laquelle une écoute est exécutée avant une transmission, et une station de base (10), dans lequel :
la station de base (10) comprend :
une section de transmission (103) conçue pour transmettre des informations de commande de liaison descendante incluant des informations concernant l'allocation d'une unité de transmission configurée d'une pluralité de blocs de ressources, et
le terminal (20) comprend :
une section de réception (203) conçue pour recevoir des informations de commande de liaison descendante ; et
une section de commande (401) conçue pour déterminer une allocation de ressources basée sur les informations concernant l'allocation,
une section de transmission (203) conçue pour transmettre un canal partagé en liaison montante physique à l'aide de l'allocation de ressources,
dans lequel les informations de commande de liaison descendante incluent des informations concernant un type de l'écoute, et
dans lequel le type d'écoute inclut :
un premier type d'écoute dans lequel, lorsqu'un canal est inutilisable lors de l'exécution d'une écoute, un temps d'écoute est prolongé et l'écoute est exécutée de manière continue jusqu'à ce que le canal soit utilisable, et
un second type d'écoute dans lequel une transmission est réalisée lorsque le canal est utilisable lors de l'exécution d'une écoute pendant une certaine période de temps.
